# EUROPEAN PATENT APPLICATION

(11) **EP 2 437 090 A1**
(43) Date of publication of application: **04.04.2012**
(21) Application number: 10013278.6
(22) Date of filing: 04.10.2010
(51) Int. Cl.: G02B 6/44, G02B 6/38

(54) **Cable connector tray, tray device, tray holder and method for connecting a connector with a mating connector**

(71) Applicant: Tyco Electronics Raychem BVBA, 3010 Kessel-Lo (BE)
(72) Inventor: Bryon, Roel Modest Willy, 3200 Aarschot (BE); Vastmans, Kristof, 3370 Boutersem (BE); De Vos, Pieter Arthur Anna, 2600 Berchem (BE); Beckers, Erwin, 3012 Wilsele (BE)
(74) Representative: Grünecker, Kinkeldey, Stockmair & Schwanhäusser

(57) **Abstract**

The present invention, which finds preferably application in the field of telecommunication technology, relates to a cable connector tray, especially to an optical fibre cable connector tray (1a; 1b), to a tray device (200) provided with such a cable connector tray (1a; 1b), to a tray holder (312; 412) provided for releasably securing said cable connector tray (1a; 1b) and to a method for connecting a connector (3) supported by said cable connector tray (1 a; 1 b). The cable connector tray (1a; 1b) comprises a tray housing (10a; 10b) with a cable opening (12) for receiving and guiding a cable (2) to an inside of the tray housing (10a; 10b) and a connector opening (14) for receiving a connector (3). The connector (3) is mounted movably relative to the tray housing (10a; 10b) so as to be movable between a mating position for connecting the connector (3) with a mating connector, and a retracted position at which the connector (3) is disconnected from the mating connector and retracted into the tray housing (10a; 10b). Thereby, a protection property of the cable connector tray can be enhanced. Further, connection between the connector and a mating connector can be simply and reliably achieved.

## Description

The present invention, which finds preferably application in the field of telecommunication technology, relates to a cable connector tray, especially to an optical fibre cable connector tray, to a tray device provided with such a cable connector tray, a tray holder for releasably securing said cable connector tray and to a method of connecting a connector provided with the cable connector tray with a mating connector.

Specifically, in the field of last mile telecommunications (Fiber-to-the-x such as FTTH, FTTC, FTTN and the like), cable connection devices are commonly used for allowing connection of single or grouped fibers either by splicing or by fixed connectors. Such fiber connections are generally sensitive to environmental influences such as dust, moisture, ultraviolet radiation and the like. Further, tray devices housing such cable connections may be frequently disturbed in order to make additions or modifications thereto after insulation thereof or to make ordinary maintenance or to mount and replace respective connections. Thus, the fiber connections may be often exposed to said environmental influences. Therefore, it is a high demand in the field of telecommunications especially using optical fiber cables to provide a device coping with the aforementioned problems.

A cable connector tray according to the preamble of claim 1 is for instance known from the United States Patent, Publication-Laid-Open No. US 5,235,665. Particularly, the known cable connector tray comprises a tray housing with a connector opening into which a connector is stationary arranged, wherein the connector is connected to an end of a plurality of optical fiber elements and extends through the connector opening. Thus, the end of the optical fiber element is further exposed to the outside of the cable connector tray and, therefore, does not be reliably prevented from being contaminated with dust, moisture and the like. Accordingly, the connection provided by the known cable connector tray may be negatively affected.

Additionally, the cable connector tray comprises a plurality of expandable clip elements for receiving associated pins provided with a tray device, thereby fixing the cable connector tray in the tray device. The clip element is part of the tray housing, which is formed of a plastic material. Accordingly, a respective releasing force is required for disassembling the cable connector tray from the tray device. In case of frequently assembling and disassembling the cable connector tray to and from the tray device, respectively, the clip elements may be damaged due to embrittlement of the plastic material. Moreover, a damage of the clip element cannot be excluded during a first or subsequent installation of the cable connector tray into a tray device. Thereby, a reliable securing of the cable connector tray against the tray device cannot be achieved.

It is an object of the present invention to provide a cable connector tray dealing with the above mentioned problems. Specifically, the present invention aims to provide a cable connector tray preferably for an optical fibre cable, which cable connector tray is improved in operating and environmental influence preventing functions. A further object of the present invention is to provide a tray device comprising such a cable connector tray and a tray holder for releasably securing the cable connector tray. Another object of the present invention is to provide a method of connecting a connector provided with the cable connector tray with a mating connector.

The above object is solved by a cable connector tray having the features as specified in claim 1. Substantially, the present invention differs from the known principle by providing a connector mounted movably relative to the tray housing so as to be movable between a mating for connecting the connector to a mating connector and a retracted position at which the connector is disconnected from the mating connector and retracted inside the tray housing. Further particular, additional means are preferably provided for co-operating with the moving function of the connector such that especially dust and moisture preventing properties of the cable connector tray can be further effectively enhanced.

The connector is connectable to an end of a cable, preferably of an optical fiber cable, which optical fiber cable is insertable into the cable connector tray through the cable opening. Preferably, the connector is held by a slidable connector holder which is slidably supported by the tray housing so as to move the connector between the mating position and the retracted position. The cable opening provides preferably an opening diameter equal or slightly smaller than an outer diameter of the cable part to be inserted therethrough. For preventing squeezing of the cable, the cable opening may be preferably provided at its boundary defining the opening diameter with a flexible material such as a jelly or further sealing material and the like, which material comes preferably sealingly in contact with the outer surface of the cable part passing the cable opening and which material does not be so rigid as to damage the cable and/or the signal transmitting element guided by the cable. The connector opening has a size for let passing therethrough preferably the connector or the mating connector. The connector and/or mating connector can be formed of a male connector or a female connector. In case of providing equal kinds of connector types, i.e. a female connector or a male connector, an adapter can be preferably interconnected therebetween. In the event, the adapter is connected to the connector which is accommodated inside the tray housing of the cable connector tray, the combination of the connector with the adapter is to be understood also as a "connector". For this combined configuration, the connector connected to the adapter denotes a connector part. The same also applies in view of the mating connector, which can be preferably formed of a mating connector part connected to an adapter, wherein such a configuration is to be likewise understood as mating connector. Accordingly, the slidable connector holder preferably provided for holding the connector may be either connected to the adapter and/or the connector part which generally supports the signal transmitting end of the cable. Preferably, the slidable connector holder may hold the connector (connector part or adapter) by means of form closure such as clamping means, snapping means or the like, by means of force closure or by means of adhesive bond. Further alternatively, the slidable connector holder may be integrally formed with the connector. In general, any feasible means suitable for holding the connector can be provided with the slidable connector holder.

Based on the above configuration, the connector may be held completely inside the tray housing to be not directly exposed to the environmental influences outside the cable connector tray. Thus, the protection property may be enhanced. Further, due to the slidable connector holder, the connector can be simply moved in a pre-aligned manner to a mating position for connecting the connector with the mating connector.

Additionally, the tray housing is preferably formed of two housing halves, which are connected to each other by means of snapping, screws, bolts or the like. Further preferably, the tray housing halves are symmetrically formed with respect to a symmetry plane extending in longitudinal direction of the cable connector tray and in parallel to a plane accommodating a lateral surface side of the tray housing. The tray housing and/or the slidable connector holder may be preferably formed of an injection molded plastic material, which material resists further preferably ultraviolet radiation. Hence, the cable connector tray may be manufactured with low costs, and the cable stored inside the tray housing may be particularly protected against sun light.

Further preferably, the connection between the connector and the mating connector is performed outside the tray housing, whereby a thus formed connection can be easier controlled to be reliably achieved. The mating position for the connector corresponds preferably to a most forward slide position of the slidable connector holder on the tray housing. In this context, with respect to tray housing sides, a front side corresponds to the side of the tray housing accommodating the connector opening, a rear side is constituted by the side of the tray housing which includes the cable opening and left, upper, right and lower sides of the tray housing are denoted by the lateral sides, respectively, each of which connects the front and rear sides, and which are arranged subsequently in circumferential direction of the tray housing, wherein the upper side opposes the lower side and the left side opposes the right side, respectively. Further particularly, the upper side of the tray housing is the side which slidably supports the slidable connector holder or connector.

Further, the retracted position for the connector corresponds preferably to the most rearward position of the slidable connector holder. In other words, the retracted position corresponds preferably at least to a position of the slidable connector holder at which disconnection of the connector from the mating connector is just obtained. Further preferably, the retracted position denotes a position which is further distant from the connector opening than the position at which the connector is just disconnected from the mating connector. Thereby, additional functions may be provided with the cable connector tray when the connector is moved from a position at which the connector is just disconnected from the mating connector toward the retracted position. These further functions will be exemplary described in the following with reference to further preferred embodiments of the present invention.

According to a further preferred embodiment of the present invention, the tray housing has a rectangular shape with the cable opening and the connector opening further preferably opposing each other. For this further preferred embodiment, the cable opening and the connector opening are arranged on a common axis forming the center axis of each opening. Thereby, the tray housing may be kept small and the cable may be stably supported. However, the present invention may not to be construed to be limited thereto. The connector opening and the cable opening may be preferably also arranged in a non-opposing manner with respect to each other.

Further preferably, the tray housing may comprise a loop storage area for accommodating a cable overlength in a looped manner, wherein said loop storage area is preferably arranged adjacent to a virtual connection line directly connecting the centers of the cable opening and the connector opening with each other. In case, the cable opening opposes the connector opening as described in the above preferred embodiment, the virtual connection line corresponds to the common axis on which the cable opening and the connector opening are arranged.

In a further preferred embodiment of the present invention, the loop storage area accommodates a splice holder provided for holding a splice formed between a cable part extending from the connector preferably connectable to the slidable connector holder and the cable to be introduced through the cable opening into the inside of the tray housing. Due to said preferred configuration, the cable connector tray may be pre-installed at a factory with the cable extending between the connector and the splice holder so as to allow at the place of usage of the cable connector tray fast installation of the cable into the cable connector tray without the necessity of conducting a rather time consuming pre-joining of an end of said cable with the connector. Only a splice operation is then to be conducted by which the cable part pre-installed within the cable connector tray is spliced with the cable end of the cable to be installed in the cable connector tray. Moreover, as mentioned above, the slidable connector holder may be preferably integrally formed with the connector, thereby providing a further ruggedized connector allowing a further improved connection between the connector and the mating connector.

Additionally, the loop storage area may preferably comprise loop storage supporting walls for guiding and radially supporting a loop of the cable installed in the cable connector tray. The loop storage supporting walls provide preferably a curvature radius equal or larger than a critical bending radius of the cable to be looped in said loop storage area.

In a further preferred embodiment of the present invention according to claim 3, the connector or the slidable connector holder may have a configuration as commonly known in the filed of movable means adapted to be slidable between two positions. Further preferably, the slidable connector holder has in a direction transverse to its moving direction a cross-sectionally U-shape providing a space for encompassing a part of the tray housing provided for slidably supporting the slidable connector holder. In other words, said part of the tray housing forms a seating for the slidable connector holder, wherein said seating preferably provides at each longitudinal end a stopper for limiting a sliding motion of the slidable connector holder in the longitudinal direction of the tray housing, which longitudinal direction corresponds substantially to the moving direction of the slidable connector holder and the connector, respectively. The stopper near the connector opening denotes a front stopper and preferably defines the mating position for the connector. The stopper distant from the connector opening and opposing the front stopper forms the rear stopper and preferably constitutes the retracted position for the connector. Further stoppers may be preferably provided between the front and rear stoppers in case of need, such as for defining further positions for achieving or indicating a specific function.

According to a further preferred embodiment of the present invention as defined in claim 4, any desired position of the connector may be suitably indicated. Preferably, the mating position corresponding to a position for performing connection between the connector and the mating connector may be easily perceived by the means of the indicator. Said indicator may preferably be a visual indicator or a sound indicator. The visual indicator may be exemplary a green-colored spot, which becomes completely visible when the connector reaches the mating position. In a preferred embodiment of the present invention, the slidable connector holder comprises an extension at its rear side corresponding to a cable opening far side, wherein the tray housing is adapted to cover said slidable connector holder extension in the retracted position. While moving the slidable connector holder toward the connector opening preferably until the connector reaches the mating position, the visual indicator is exposed to an outside of the tray housing, thereby becoming perceivable for an operator. Alternatively, the visual indicator may be provided on the upper part of the tray housing, which slidably supports the connector and/or the slidable connector holder, wherein said visual indicator is covered by the slidable connector holder at the retracted position and is at least fully visible when the connector reaches the mating position. In general, the visible indicator may be formed of any means suitable for drawing the attention of the operator using the cable connector tray.

As mentioned above, the indicator may be alternatively or additionally a sound indicator, which sound may be perceived as a "click". Preferably, such a click-sound may be achieved by means of snapping, wherein the slidable connector holder and the tray housing provides snapping means engaging with each other at the mating position of the connector. However, the present invention is not to be construed to be restricted to snapping means for perceiving the click-sound. Any means suitable for making a sound when the connector reaches the mating position can be used therefore, wherein the slidable connector holder and /or the tray housing are to be configured accordingly.

In a further preferred embodiment of the present invention having the features of claim 5, the tray housing may be fully closed to protect the cable inside the tray housing against the environmental influences. Preferably, the connector opening shutter is movably supported inside the tray housing and has a size for fully closing the connector opening to prevent contamination of the inside of the tray housing with dust and/or moisture or the like. Further preferably, the connector opening shutter is configured and arranged inside the tray housing to be movable in parallel to the connector opening and transverse, more preferably perpendicular to the moving path of the connector. The connector opening shutter may be preferably formed of an injection molded plastic material. Moreover, the connector opening shutter is preferably operable from an outside of the tray housing. For this, a further slider may be movably supported by at an outer surface side of the tray housing, wherein the slider is connected with the connector opening shutter through a shutter connection opening formed by the tray housing. Alternatively, the connector opening shutter preferably comprises a shutter moving means such as a pin or the like which extends through a shutter moving guidance, preferably a guidance slit formed with the tray housing to preferably project the tray housing at an outside thereof. The shutter moving guidance has a size adapted to allow movement of the shutter moving means, i.e. of the connector opening shutter between the open position and the closed position. Further preferably, the connector opening shutter cooperates with a shutter spring element arranged between the connector opening shutter and an inside surface of the tray housing so as to automatically move the connector opening shutter between the open and closed position by means of the spring force. It is preferred that the shutter spring element provides a pre-tension for moving the connector opening shutter from the open position to the closed position by means of the spring force. In other words, the shutter spring element may preferably adopt a proximately relaxed state in the closed position of the connector opening shutter and a tension state in the open position of the connector opening shutter. However, in the relaxed state corresponding to the closed state, a small tension for the spring element is preferred to ensure closure of the connector opening. The part of the connector opening shutter closing the connector opening may be preferably provided with a seal for sealing the connector opening in the closed state. According thereto, the protection property of the cable connector tray may be further improved.

In a further preferred embodiment of the present invention, the cable connector tray comprises a dustcap remover as specified in claim 6. Hence, the dustcap protecting the endface of the connector, preferably a signal transmission end of the cable held by the connector, can be kept installed on the connector until a connection between the connector with the mating connector is to be conducted. In other words, after installation of the connector in the tray housing and preferably connection with the slidable connector holder, the dustcap does not need to be removed in an open state of the tray housing. The tray housing may be closed and the cable connector tray may be installed in a tray holder while the dustcap is still mounted on the connector. Thereby, the protection function of the cable connector tray can be further enhanced.

Further preferably, the dustcap remover is adapted to remove the dustcap from the endface of the connector while moving the connector toward the retracted position. Particularly, the dustcap remover comprises a dustcap receiving recess receiving the dustcap from a side perpendicular to the moving direction of the slidable connector holder and of the dustcap remover. Further preferably, the dustcap remover is slidably guided by guiding means provided with an inside surface of the tray housing to be slidable in a direction transverse to the moving direction of the connector. The dustcap remover comprises preferably a spring element adapted to move the dustcap remover away from the connector while the connector is moved toward the retracted position. The spring element is pre-stressed in a state in which the dustcap is installed on the connector and held by the dustcap remover. Accordingly, while removing the dustcap from the connector due to a motion thereof toward the retracted position, the pre-stressed spring element relaxes and moves the dustcap remover with the dustcap away from the sliding path of the connector. Due to said configuration, the dustcap installed on the connector can be automatically removed therefrom. Accordingly, said dustcap can be removed from the connector even though the tray housing is closed. The protection property of the cable connector tray is further improved thereby.

According to a further preferred embodiment of the present invention, the cable connector tray comprises a sleeve portion longitudinally arranged between the cable opening and the connector opening for accommodating therein a cable fixation module to secure the cable against the tray housing. Thereby, a secure fixation of the cable received by the cable opening can be obtained inside the tray housing. Further, an axial pull relief from the connector can be achieved. Particularly, an axial tension load may act on the cable in its longitudinal direction, which axial tension load would negatively affect a connection to be made between the connector and the mating connector. By means of the cable fixation module which secures the cable to the tray housing preferably near the cable opening, the axial tension load can be transmitted from the cable to the tray housing, thereby providing axial pull relief from the connector. Additionally, an already known wrap-around cable fixation module such as particularly described in an earlier International Patent application of the applicant, Laid-Open Publication No. WO 2009/040566 A1, can be used, wherein the cable fixation module to be used for the cable connector tray of the present invention may be preferably further provided on an outer surface side with a spring element which provides a resilient force along a direction extending transverse, preferably substantially perpendicular to said outer surface side and being directed away therefrom. Thus, in the received state of the cable fixation module, the spring element presses the cable fixation module against respective inner surfaces of the sleeve portion to secure the cable fixation module against the sleeve portion.

In an alternative preferred embodiment, a cable fixation may be provided integrally with the tray housing inside thereof for simplifying the configuration of the cable connector tray, wherein said internally provided cable fixation may preferably clamp or generally secure the cable against the tray housing so as to prevent movement thereof in a longitudinal direction of the cable and to absorb axial tension load acting on the cable. Exemplary, the cable opening may be preferably configured with an inner diameter as described above. In general, any configuration of the tray housing or other means capable of securing the cable there against may be feasible.

According to a further preferred embodiment of the present invention, the cable connector tray may have a configuration as defined in claim 8. Due to said configuration, the cable connector tray may be simply secured within a tray holder. In one preferred embodiment of the present invention, the snapping means comprise at least two snappers arranged at opposing sides (front and rear sides) of the tray housing and extending substantially in opposing directions with respect to each other. Such a configuration is particularly preferable for a tray holder and a cable connector tray, each having basically a U-shape configuration such as a trapezoidal shape or the like, wherein the tray holder provides snapping receiving means for receiving the respective snappers of the cable connector tray. Preferably, at least one of the snappers is a stationary snapper fixed to an outer surface of the tray housing. Such a stationary snapper may be preferably integrally formed with the tray housing.

Alternatively or in addition thereto, at least one of the snappers is a slidable snapper slidably supported by the tray housing to be slidable between a releasing position for releasing the cable connector tray from the tray holder and a securing position for securing the cable connector tray against the tray holder. Further preferable, the slidable snapper is fully retractable toward an inside of the tray housing for allowing reliable releasing of the cable connector tray from the tray holder. The releasing can be alternately obtained by a partial slide of the slidable snapper toward the inside of the housing, wherein the slidable snapper slightly protrudes from the tray housing. However, this partial slide may have the risk that the protruding part of the slidable snapper may hinder the releasing action due to hooking or the like. Therefore, for reliably obtaining the releasing function, it is rather preferred that the slidable snapper is fully retractable toward an inside of the tray housing. Notwithstanding, the present invention is not to be construed to be limited to this fully retractable configuration even though more preferred. In case of need, the slidable snapper may also be configured to slightly protrude from the tray housing in its retracted position.

It is further preferred that a snapper receiving space provided inside the tray housing for accommodating the slidable snapper in its retraced position is separated from the inside of the tray housing accommodating the cable part and connector to prevent contamination thereof with dust and/or moisture.

According to another aspect of the present invention, a tray device having the features as defined in claim 10 is provided. Preferably, the shutter guidance is configured to cooperate with the shutter moving means as described above with respect to the preferred embodiment of claim 5. Particularly, the shutter guidance may be preferably formed of a recess for receiving the projecting part of the shutter moving means in an assembled state of the cable connector tray on the tray holder. The recess preferably extends so as to guide the shutter moving means between the open and closed positions of the connector opening shutter. The recess in the sense of the present invention may also cover a groove and any guiding means capable for guiding a projecting part of the shutter moving means, which projecting part projects the outer surface of the tray housing Due to said configuration, the connector opening shutter may be automatically removed from the connector opening while the cable connector tray is mounted on the tray holder. Additionally, by disassembling the cable connector tray from the tray holder, the connector opening shutter is guided by the shutter guidance in the closed position and preferably held in said closed state by means of the shutter spring element. A handling of the tray device can be thereby further improved.

In a further or alternative preferred embodiment of the present invention, a tray device is provided which comprises at least one cable connector tray with opposing snappers as described above and a tray holder comprising a tray holder frame for receiving and releasably holding the at least one cable connector tray so as to accessibly expose the connector opening, the cable opening and the slidable connector holder if provided. Each of the tray holder and the at least one cable connector tray provides movable means for releasing a securing performed between snapping means provided with each of the tray holder and the at least one cable connector tray, which snapping means are associated with each other for releasably securing the at least one cable connector tray against the tray holder. The tray device may not be construed to be limited to comprise only cable connector trays having a configuration as described beforehand. Particularly, the tray holder may also be configured to hold a combination of at least one cable connector tray according to the present invention with one or more commonly known cable connector trays. Based on the configuration of the inventive tray device, the cable connector tray can be simply secured and released from the tray holder.

In a further preferred embodiment of the present invention, the movable means is formed of an elastically deformable member arranged between an upper surface of the tray holder and a thereto opposing lower surface of the at least one cable connector tray. Said elastically deformable member may be preferably a spring element such as a coil spring, which is insertable between the opposing surfaces during installation of the cable connector tray in the tray holder. Alternatively, the spring element may be connected with the respective surface of the tray holder or the cable connector tray. In general, any compressible member may be used therefore, which compressible member provides a resilient force in reverse direction of its compression. For this preferred embodiment, it is further preferred that the cable connector tray comprises at least one slidable snapper which may be operable by the slidable connector holder or by a further slider slidably supported by the tray housing. After operating the slidable connector holder or said further slider, the slidable snapper may slip out of the associated snapping receiving means, thereby enabling the spring element to push the cable connector tray away from the tray holder so as to allow a simple release of the cable connector tray from the tray holder. The spring element is preferably arranged at a side of the tray housing which is adjacent to the slidable snapper.

According to an alternative preferred configuration, the elastically deformable member may be part of the tray holder frame. Further preferably, the tray holder frame is formed of a flexible material allowing a bending motion thereof. The tray holder frame is further preferably configured to provide a contact surface of a cross-sectional shape corresponding to a cross-sectional outer shape of the cable connector tray surface to be installed thereon. Particularly, the cable connector tray may be preferably of a substantially trapezoidal form with a tray housing extension forming the sleeve portion provided in extension of the baseline and protruding from an apex of the trapezoidal shape, wherein the tray holder frame adopts said trapezoidal form with a respective extension being larger in longitudinal size than the sleeve portion. In other words, the extension of the tray holder frame preferably protrudes from the cable opening in longitudinal direction of the installed cable connector tray. Further, the snapping means are preferably arranged at the non-parallel sides of the trapezoidal shaped tray housing and tray holder frame, respectively. Thereby, assembling and disassembling of the cable connector tray on the tray holder can be further improved.

Moreover, the tray holder frame is preferably secured against the tray holder at a position adjacent to an upper surface side of the tray holder, wherein the tray holder frame extension extends by a distant formed between a lower surface of the tray holder extension and an upper surface of the tray holder. Accordingly, said securing point provides a fulcrum around which the tray holder frame may be bent when the tray holder frame extension is pushed in a direction corresponding to an installation direction of the cable connector tray. Therefor, a specific clearance between the tray holder frame and the cable connector tray in its assembled state is preferred in order to allow the slight movement of the cable connector tray due to the bent of the tray holder frame. Said clearance may be alternately obtained by providing for the tray holder frame a material which is slightly compressible. In case, the cable connector tray comprises a slidable snapper, a clearance does not need to be necessarily provided. Due to the bending property of the tray holder frame, the cable connector tray can be pushed toward the front side thereof, wherein the rear snapper may be removed from the associated snapper receiving hole provided in the tray holder.

Further preferably, the tray holder comprises a compressible member provided on a surface of the tray holder frame for receiving a lower surface of the cable connector tray and being elastically compressed in the secured state thereof, so as to push the cable connector tray away from the tray holder after the snapper is released from the associated snapper receiving means. Preferably, the compressible member covers the tray holder frame from its bottom toward the securing point thereof. The compressible member is preferably made of a material providing a resilient force in its compressed state in a reverse direction of the compression direction. As a further result, the cable connector tray can be easily disassembled from the tray device.

In a further alternative or preferred embodiment of the present invention, a tray device having the features as specified in claim 11 is proposed. Preferably, the wall portion guidance or the at least one lateral snapper is formed of a protrusion protruding from the respective surface of the wall portion or the tray housing, respectively, wherein the other one of the wall portion guidance and the at least one lateral snapper is formed of a recess for receiving and guiding the protrusion, respectively. In order keep the tray housing of the cable connector tray as small as possible, it is preferred that the at least one lateral snapper forms the protrusion. For this preferred embodiment, the wall portion guidance formed by a recess extends preferably from a receiving side of the at least one wall portion toward an opposing side thereof. The receiving side of the at least one wall portion corresponds to a side at which the cable connector tray is inserted into the tray holder. The wall portion guidance may extend in a straight or slightly curved manner and further preferably transverse from an upper side of the tray holder toward a lower side thereof. Based on said configuration, the cable connector tray may be simply inserted from the upper side of the tray holder, which upper side is generally accessible due to a mounting of the tray device with its bottom side on a respective mounting panel. The number of the lateral snappers and the associated wall portion guidance's are not limited. Accordingly, at one lateral side of the tray housing of the cable connector tray, there may be preferably provided more than one lateral snapper. For obtaining a reliable securing of the cable connector tray against the tray holder and to provide a simple shaped tray housing, two lateral snappers are preferred. As a matter of course, one snapper may be preferably formed at one lateral side and the other lateral snapper may be provided at the opposing lateral side. The guidance provided with the at least one wall portion of the body is respectively formed. Further preferable, the tray holder forms a receiving channel having cross-sectionally a U-shape, wherein the legs of said U-shape form the respective wall portion of the tray holder. Thus, the wall portion guidance is formed at the inside surface of the opposing wall portions forming the cross sectionally U-shaped tray holder.

Based on the above preferred configuration, the tray holder can be formed of a simple shape having a small size. Preferably, the body may be provided with a plurality of receiving channels, wherein the wall portion separating at least two channels from each other may be provided at each surface side with the guidance as described above.

A further alternative preferred tray device of the present invention is specified by claim 12. Due to said configuration, the tray holder can be kept small, wherein the cable connector tray can be simply installed thereon. Additionally, the cable connector tray is preferably to be received by the tray holder so as to arrange the connector opening in opposing manner with respect to a mating connector, preferably to a mating connector opening provided with the tray holder and for receiving and supporting the mating connector. The connector opening and the mating connector opening are preferably aligned in the assembled state of the cable connector tray so as to ensure reliable connection between the connector and the mating connector.

The guiding and pivoting means can be formed of any means suitable for mounting the cable connector tray on the tray holder by a guiding and pivoting motion. Exemplary, the guiding and pivoting means can be formed of a pair of recesses preferably provided with the tray holder, wherein the associated guiding and pivoting means of the cable connector tray may be a pair of pins which extend in opposing direction with respect to each other and wherein one pin is formed at one lateral side and the other pin at the opposing lateral side of the tray housing. Further preferably, the pins are arranged adjacent to an upper surface side of the tray housing to keep the configuration of the tray holder small. The recesses, which can be also realized by a groove shape, are configured to receive and guide the pins respectively until the cable connector tray reaches its assembling position, which assembling position corresponds to a position at which at least the connection between the connector supported by the cable connector tray with the mating connector supported by the tray holder is conductable. The assembling position further preferably corresponds to a securing position of the cable connector tray in which position the cable connector tray is releasably secured against the tray holder. Further particularly, the recess may extend transversely or perpendicular to a connection direction of the mating connector from an upper side of the tray holder toward a lower side thereof. In order to provide an axial pull relief function with respect to the connection formed between the connector and the mating connector, the recess preferably extends transversely from the upper side of the tray holder toward the lower side while departing from the endface of the mating connector. Further preferably, the recess comprises a notch for receiving the pin of the cable connector tray in its assembled position, wherein an opening of the notch directs toward the endface of the mating connector.

According to a further aspect of the present invention, a tray holder having the features as defined in claim 13 is provided. Preferably, the tray holder comprises a casing with two opposing openings, wherein one opening is configured to receive and support the endface of the mating connector and wherein the opposing opening is closed by the movable tray holder shutter and adapted to receive the connector of the cable connector tray. Thus, the mating connector may be protected against environmental influences. Further preferably, the tray holder shutter is hingeably supported by a tray holder pin arranged at an upper inner side of the opposing opening or in front thereof, wherein the tray holder shutter has a size for closing the opposing opening. Particularly, the tray holder pin provides a pivot axis for the tray holder shutter. Further preferably, the tray holder shutter is pivotable around the tray holder pin toward the mating connector receiving opening, wherein a distance between the tray holder pin and said receiving opening is set so as to ensure, in a received state of the mating connector, an unhindered pivoting motion of the tray holder shutter from the closed position at which the opposing opening is covered/closed by the tray holder shutter to the open position at which the opposing opening is passable by the connector. Hence, the tray holder shutter can be opened preferably by the connector while moving the connector toward its mating position or by a front part of the cable connector tray while the cable connector tray is mounted on the tray holder. For the latter case, the tray holder shutter and the opposing opening, respectively, have preferably a size for receiving the front part of the cable connector tray so as to accommodate in the space formed between the opposing openings of the tray holder at least said front part of the cable connector tray which includes the connector opening. Thus, a complete protected connection may be performed between the connector and the mating connector.

Additionally, the tray holder has preferably a configuration as specified by claim 14. Such axial pull relief means can be formed by a pair of recesses having a configuration as described above. Preferably, the pair of recesses is arranged in front of the tray holder shutter, i.e. on a side of the tray holder shutter facing to an outside of the tray holder, i.e. the side facing away from the endface of the mating connector.

In compliance with another aspect of the present invention, a method for connecting a connector with a mating connector as defined in claim 15 is proposed.

Even though the present invention has been described in regard of several preferred embodiments, each having a specific configuration, each preferred embodiment may be appropriately adapted to be provided with one or more of the features realized with the other preferred embodiments, respectively.

The present invention will now be described in further detail by referring to preferred embodiments depicted in the accompanying drawings. In these drawings:
- Fig. 1: shows a perspective side view of a cable connector tray according to a preferred embodiment of the present invention;
- Figs. 2A and 2B: show an enlarged perspective view of a slidable connector holder provided with the cable connector tray as shown in Figure 1;
- Fig. 3: shows a perspective side view of a cable connector tray according to a further preferred embodiment of the present invention;
- Fig. 4: shows a perspective side view of an open cable connector tray as shown in Figure 2;
- Fig. 5A - 5D: show perspective side views of the cable connector tray as shown in Figure 4 with different positions of the slidable connector holder;
- Fig. 6: shows a perspective top view of a tray device according to a preferred embodiment of the present invention;
- Fig. 7A and 7B: show a side view of the cable connector tray as shown in Figure 1 and a tray holder provided with the tray device as shown in Fig. 6;
- Fig. 8A - 8F: show side views of the cable connector tray as shown in Fig. 2 during assembling to a tray holder of a tray device according to a further preferred embodiment of the present invention;
- Fig. 9A - 9C: show side views of the cable connector tray as shown in Fig. 2 during disassembling from the tray holder as shown in Figures 8A to 8F;
- Figs. 10A - 10D: show side views of the cable connector tray as shown in Fig. 1 during assembling to a tray holder of a tray device according to a further preferred embodiment of the present invention;
- Fig. 11 A and 11 B: show perspective top views of a closed and opened wrap-around fixation module used for the cable connector tray according to the preferred embodiments of the present invention; and
- Fig. 12: shows a perspective top view of a cable support member provided with the wrap-around cable fixation module shown in Figures 11A and 11B.

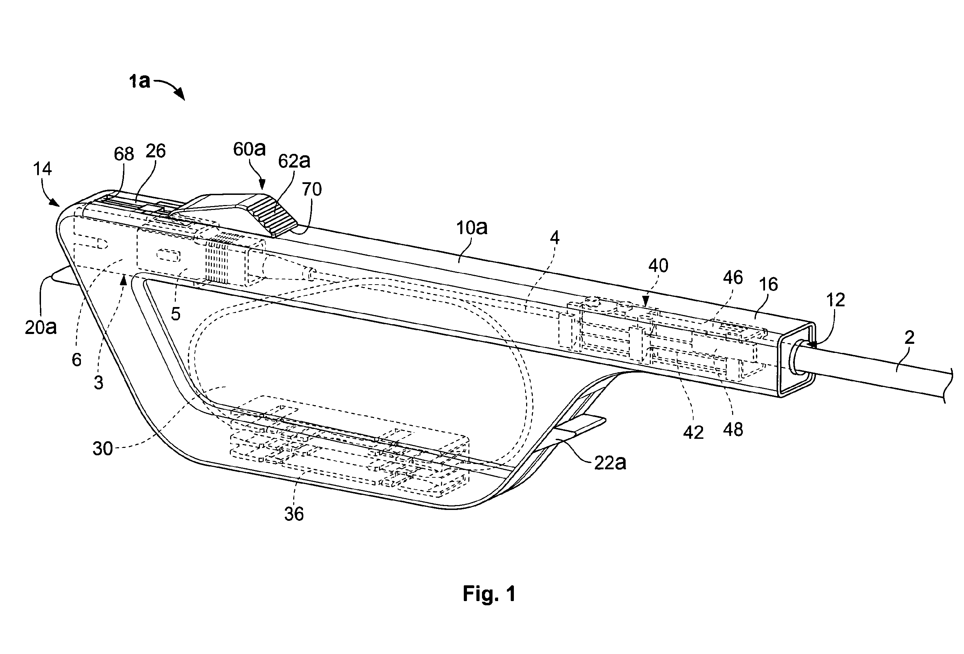

Figure 1 shows a perspective side view of a cable connector tray 1 a according to a preferred embodiment of the present invention. The cable connector tray 1a comprises a tray housing 10a made of an injection molded plastic material and providing at a rear side thereof a cable opening 12 for receiving and guiding a cable 2 toward an inside of the tray housing 10a and at a front side opposing the cable opening 12, a connector opening 14 for receiving a connector 3 connected to an end of the cable 2 received inside the tray housing 10a. The cable 2 is an optical fiber cable commonly known in the technical field of telecommunications, wherein said optical fiber cable 2 comprises substantially an outer jacket surrounding an optical fiber element 4 fro transmitting the optical signal.

The tray housing 10a has basically a trapezoidal shape with an extension protruding by a predetermined length in longitudinal direction of the base line of said trapezoidal shaped tray housing 10a. The base line of the tray housing 10a forms the upper side of the cable connector tray 1a. Said extension is formed of a sleeve portion 16 which accommodates the cable opening 12. The cable opening 12 has an inner diameter substantially equal to an outer diameter of the part of the cable 2 passing the cable opening 12.

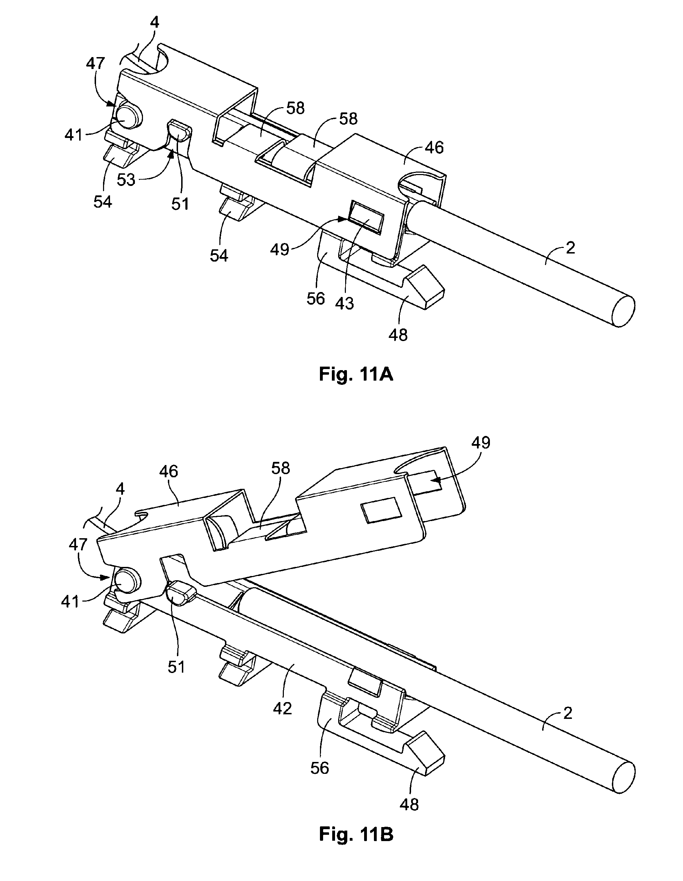

The sleeve portion 16 provides inner pressing surfaces 18 and accommodates a wrap-around cable fixation module 40 securing the cable 2 against the tray housing 10a by a pressing applied against the inner pressing surfaces 18. At least two opposing inner pressing surfaces are required. Preferably, the sleeve portion 16 is rectangular formed, wherein each of the inner surface sides of the sleeve portion 16 provides an inner pressing surface 18. Thus, the wrap-around cable fixation module 40 may be inserted regardless of its rotation. The wrap-around cable fixation module 40 has a configuration basically known from the International Patent application WO 2009/040566 A1. A preferred configuration of the preferred wrap-around cable fixation module will be described with reference to Figures 11A to 12. By usage of said conventional wrap around cable fixation module 40, the cable 2 can be simply and reliably secured against the tray housing 10a without depending unduly on the craft skills of an installer.

The space provided below the base line of said trapezoidal shaped tray housing 10a forms a loop storage area 30 for storing the looped optical fiber element 4. The loop storage area 30 further accommodates a splice holder 36 holding the splice formed between part of the optical fiber element extending from the sleeve portion 16 to the splice holder 36 and the part of the optical fiber element 4 extending from the splice holder 36 to the connector 3. Due to said configuration, the cable connector tray 1 a can be installed at a factory with the connector 3 and the part of the optical fiber element 4 ranging from the connector 3 to the splice holder 36. Thus, a technician using the cable connector tray at the place of installation thereof, may simply insert the optical fiber cable 2 into the tray housing 10a and splices the optical fiber element 4 with the part of the optical fiber element 4 already stored in said tray housing 10a. Hence, a connection of an end of the optical fiber element 4 to a connector 3 which is rather more time consuming as performing a splicing operation can be avoided. As a result, the installation of the optical fiber cable 2 to be installed into the tray housing 10a can be conducted faster.

The connector 3 is formed of a first connector part 5 supporting a ferrule holding the end of the optical fiber element 4 and a second connector part 6 secured against the first connector part 5 by means of clipping and being provided for receiving a mating connector for performing optical connection between the connector 3 and the mating connector.

The tray housing 10a has on the upper side a guidance slit 26 which is arranged near (adjacent to) the connector opening 14. The guidance slit 26 cooperates with a slidable connector holder 60a slidably supported on said upper surface side of the tray housing 10a. For reliably performing the sliding motion of the slidable connector holder 60a, the upper surface side of the tray housing is preferably flat shaped. The slidable connector holder 60a comprises a handle 62a accessible from an outside of the tray housing 10a to be manually operated by the technician. The slidable connector holder 60a is slidable in longitudinal direction of the guidance slit 26. The guidance slit 26 provides at its longitudinal end portions stop positions (stopper) 68 and 70 for the slidable connector holder 60a. The stop position 68 arranged near the connector opening 14 corresponds to a mating position for the slidable connector 60a, whereas the other opposing stop position 70 corresponds to a retracted position for the slidable connector holder 60a. The retracted position 70 is set so as to ensure that the connector 3 is completely stored inside the tray housing 10a. In other words, at the retracted position 70, the connector 3 does not protrude to the outside of the tray housing 10a. The mating position 68 is set so as to ensure a reliable connection with the mating connector.

The slidable connector holder 60a comprises a mid-part (not shown) connected to the handle 62a and passing through the guidance slit 26, wherein said mid-part is guided by the guidance slit 26, respectively. Said mid-part is further connected with a holding part (not shown) for holding the connector 3. The holding part may be formed by any means suitable for holding the connector. Preferably, the holding part is adapted to hold a commonly known connector. Thus, for the cable connector tray 1 a, conventional connectors may be used. At least, the holding part is required to be configured so as to enable a motion of the connector 3 in a direction toward and away from the connector opening 14. The tray housing 10a may further provide guiding supports facing one or more sides of the connector 3 for preventing swinging of the connector 3 while being moved due to the sliding motion of the slidable connector holder 60a. At the mating position 68, the connector 3 passes at least partially through the connector opening 14 for enabling optical connection with the mating connector.

Based on said slidable connector holder 60a, the dust and moisture preventing function of the cable connector tray 1a is improved. Further, connection between the connector 3 and the mating connector can be simply conducted.

The tray housing 10a further comprises a front snapper 20 and a rear snapper 22 arranged each at an arm of the trapezoidal shaped tray housing 10a and extending from said tray housing 10a in opposing directions and basically in parallel to the upper side of the tray housing 10a. The front and rear snappers 20, 22 are fixed to said tray housing 10a. Preferably, the snappers 20, 22 are formed integrally with the tray housing 10a. Alternatively, one of said snappers 20, 22 can be configured to be slidable in its extension direction so as to be partially or fully retracted to an inside of the tray housing 10a. Such a slidable snapper may be connected with the slidable connector holder 60a to be moved dependent on the motion of said slidable connector holder 60a. Particularly, at the retracted position 70 of the slidable connector holder 60a, the slidable snapper may be partially or fully retracted inside the tray housing 10a. Further, at the mating position 68 of the slidable connector holder 68, the slidable snapper may adopt an extended state for allowing securing of the cable connector tray 1 a to a tray holder as described further below.

The cable connector tray 1a is preferably formed of an injection molded plastic material. The cable connector tray 1a may further comprise sealing material for completely sealing the tray housing 10a in order to ensure that no dust or moisture and the like can be introduced to an inside of the tray housing 10a which normally results in contamination of the optical fiber element 4. Further preferable, the tray housing 10a may be formed of two housing halves having further preferable a symmetrical shape. Particularly, the symmetry plane may extend in longitudinal direction of the cable connector tray 1 a, that is in a direction parallel to the direction extending between the cable opening 12 and the connector opening 14, respectively. Thus, installation of the cable 2 can be easily done.

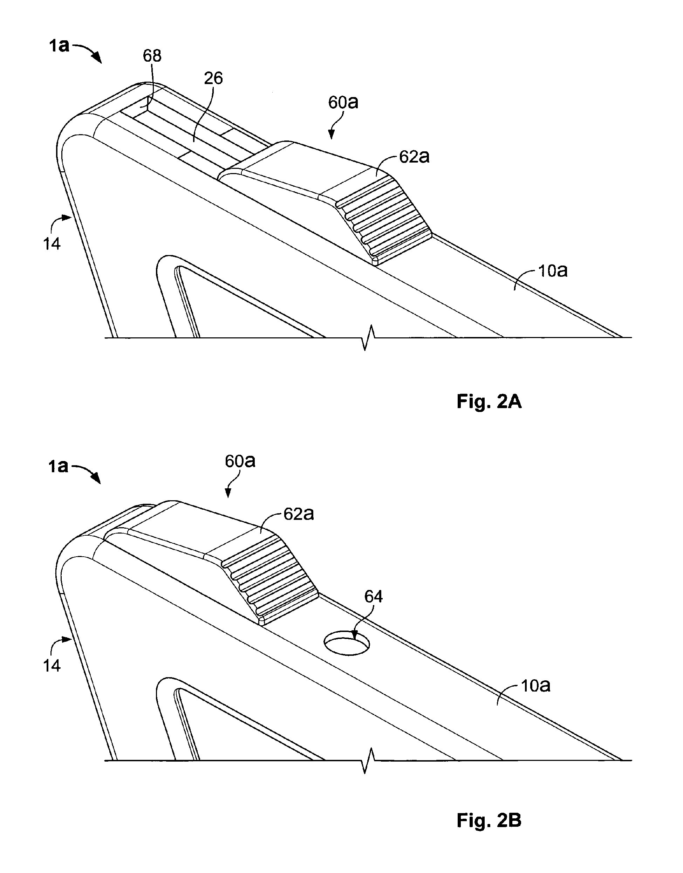

Figures 2A and 2B show an enlarged perspective top view of the front side of the cable connector tray 1a as shown in Figure 1. Particularly, said Figures show the slidable connector holder 68 with its handle 62a being movable in longitudinal direction of the guidance slit 26 toward the mating position 68. As particularly shown in Figure 2B, the cable connector tray 1 a comprises a visual indicator 64 for indicating that the slidable connector holder 60a reached the mating position 68 at which optical connection between the connector 3 and the mating connector is obtained. The color of the signal indicator 64 is preferably different to that of the slidable connector holder 60a and the tray housing 10a. The visual indicator 64 may be alternately formed on the upper surface of the tray housing 10a so as to be completely recognizable for the technician when the slidable connector holder 60a reaches the mating position 68. In the retracted position 70, the visual indicator 64 is covered by the slidable connector holder 68, respectively.

In an alternative embodiment, the slidable connector holder 60a may comprise a tape-like extension protruding from a connector opening far side of the slidable connector holder 60a in longitudinal direction of the tray housing 10a, wherein said tape-like extension is covered at the retracted position 70 by the upper surface of the tray housing 10a. While moving the slidable connector holder 60a toward the mating position 68, the tape-like extension preferably integrally formed with the slidable connector holder 60a likewise moves out of the coverage provided by the tray housing 10a so as to be exposed and visible from the outside of the tray housing 10a. By reaching the mating position 68, the tape-like extension providing the visual indicator 64 is preferably fully exposed for indicating that optical connection is performed with the mating connector.

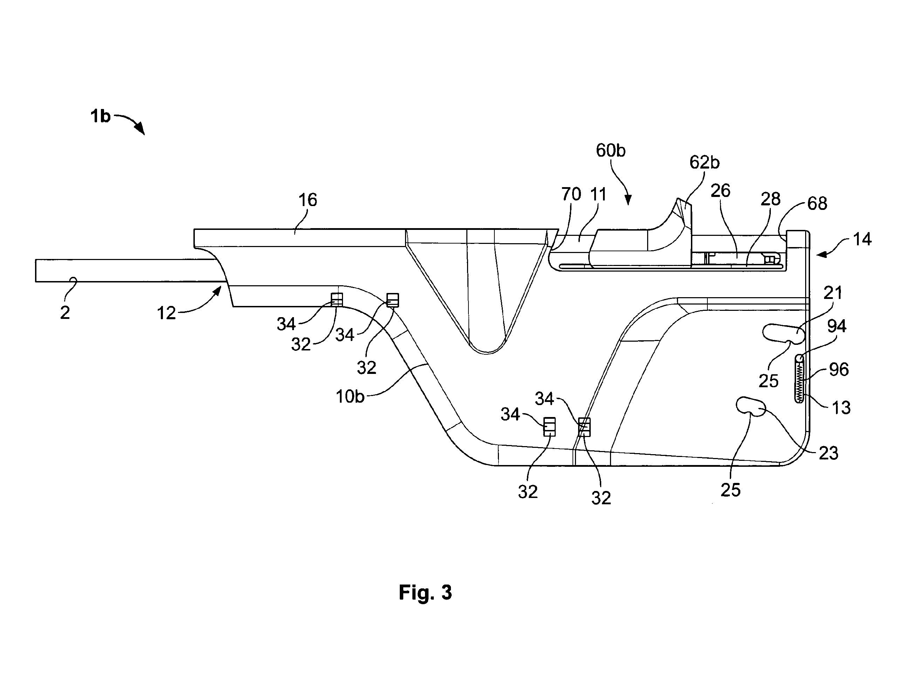

Figure 3 shows a perspective side view of a cable connector tray 1 b according to a further preferred embodiment of the present invention. Same reference signs indicate substantially same parts for the cable connector tray, respectively.

The cable connector tray 1 b has substantially a similar shape as the above-described cable connector tray 1 a except that the front arm of the trapezoidal shaped tray housing 10b protrudes substantially perpendicular with respect to the base line. Further, at the rear side, the tray housing 10b is curved shaped so as to form a roof for the cable opening 12 when viewed from an upper surface side of the cable connector tray 1 b. Thereby, dust and the like can be further prevented from entering the inside of the tray housing 10b through the cable opening 12.

Moreover, the tray housing 10b comprises at a lateral side thereof near the connector opening 14 and below the slidable connector holder 60b, a pair of lateral snappers 21, 23 having a convexity 25 at a side facing the lower side of the tray housing 10b. The lateral snappers 21, 23 have basically an oval shape and are arranged spaced apart from each other, wherein the upper lateral snapper 21 is arranged nearer to the front side of the tray housing 10b than the lower lateral snapper 23. Said lateral snappers 21, 23 are slightly inclined with respect to the front side of the tray housing 10b. Said lateral snappers 21, 23 are used for allowing simple installation of the cable connector tray 1b to a tray holder. The lateral snappers 21, 23 further enable a guided installation of the cable connector tray 1 b.

The tray housing 10b further provides on its upper surface side a recess part 11 forming a seat for the slidable connector holder 60b, wherein the longitudinal ends of said seat has a shape corresponding to a shape of the longitudinal ends of the slidable connector holder 60b, respectively. Accordingly, the longitudinal ends provided by said recess part 11 form respective stop positions for the slidable connector holder 60b. The slidable connector holder 60b has a different shape as the slidable connector holder 60a shown in Figure 1. However, the slidable connector holder 60a can be likewise provided with the further preferred embodiment of the cable connector tray 1b. Substantially, the slidable connector holder for the cable connector tray according to the present invention has a handle formed by a ridge part protruding away from the upper side of the tray housing 10b. For further improving handling of the slidable connector holder 60a, 60b, said slidable connector holder 60a, 60b may be provided with a grip portion providing an uneven surface shape for the slidable connector holder 60a, 60b (see Figure 1).

The tray housing 10b is formed of two housing halves being substantially symmetrically formed with respect to each other and are secured against each other by means of engagement. Particularly, the engagement means comprise a plurality of engagement hooks 32 formed with one of the housing halves and a respective number of engagement recesses 34 for receiving the associated engagement hooks 32.

As further shown in Figure 3, the tray housing 10b comprises in the recess part 11 at a lateral side a lateral guidance slit 28 for supporting guidance of the slidable connector holder 60b between the retracted position 70 and the mating position 68. Particularly, the lateral guidance slit 28 extends in parallel to the guidance slit 26 provided on the upper surface side of the tray housing 10b. The lateral guidance slit 28 is engaged by small slidable connector holder protrusions extending at a lower side of the slidable connector holder 60b toward the inside of the tray housing 10b. Thereby, the sliding motion of the slidable connector holder 60b can be further stabilized. The tray housing 10b preferably provides at the lateral side not shown in Figure 3 a similar configuration, that is the tray housing 10b forms at the opposing lateral side of the tray housing 10b likewise a lateral guidance slit 28 receiving and guiding a small protrusion of the slidable connector holder 60b also formed at the opposing lateral side of the slidable connector holder 60b.

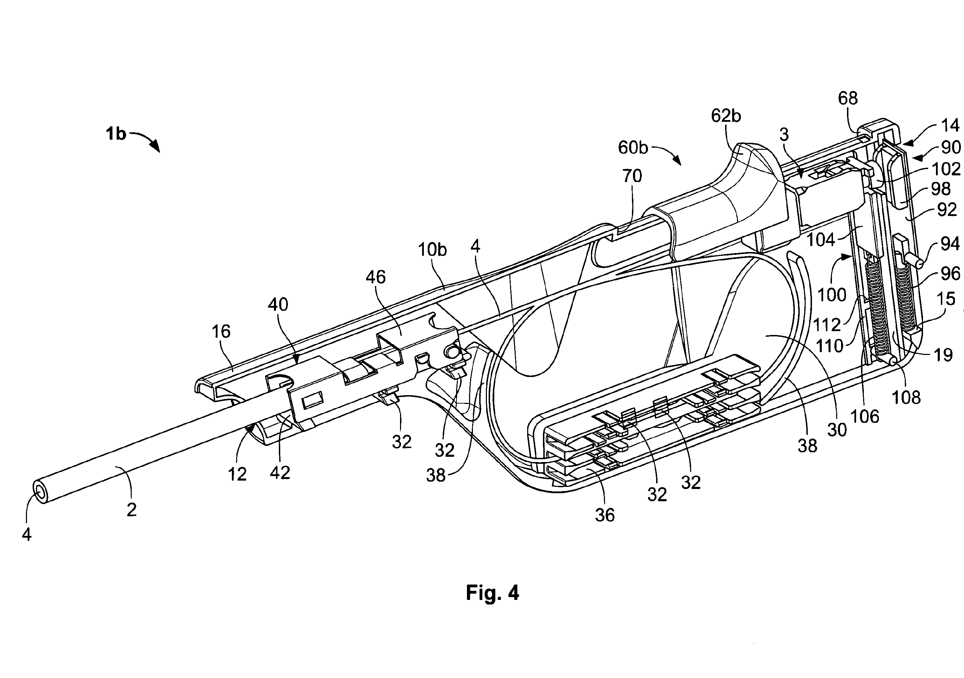

Figure 4 shows a perspective side view of one housing half of the tray housing 10b with the slidable connector holder 60b, the wrap-around cable fixation module 40 securing the cable 2, the splice holder 36 holding the splicing formed between the part of the optical fiber element 4 extending from the wrap-around cable fixation module 40 toward the splicing holder 36 and the part of the optical fiber element 4 extending from the connector 3 to said splice holder 36. As further shown in said Figure 4, the loop storage area 30 accommodates loop storage support wall portions 38 supporting and guiding the loop formed by the optical fiber element 4. At the rear side of the tray housing 10b, the loop storage support wall portion 38 merges with the tray housing 10b, respectively. A curvature of said loop storage support wall portions 38 is set to be equal or larger than a critical bend radius of the optical fiber element 4 to be stored inside the cable connector tray 1 b.

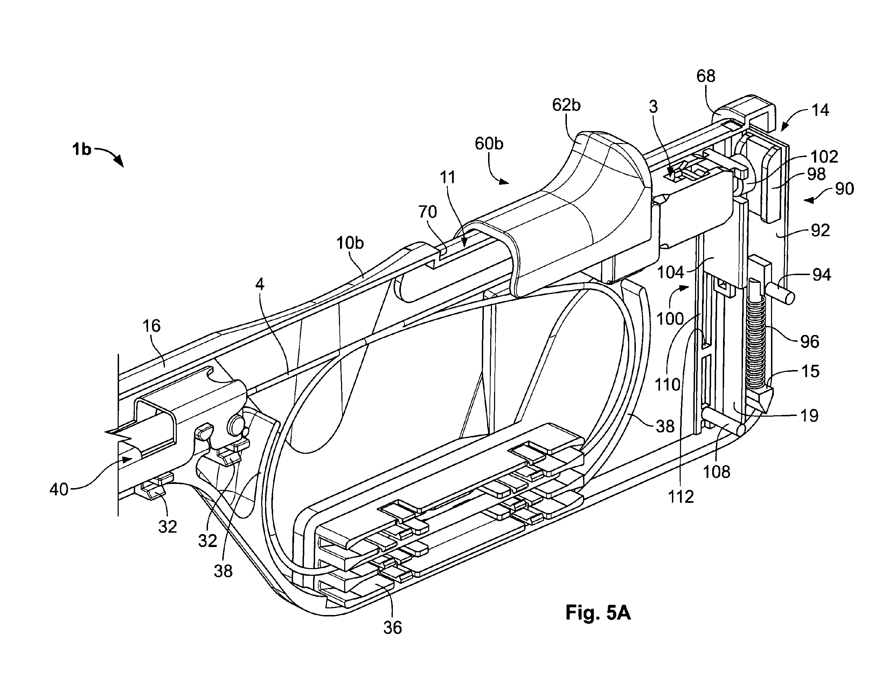

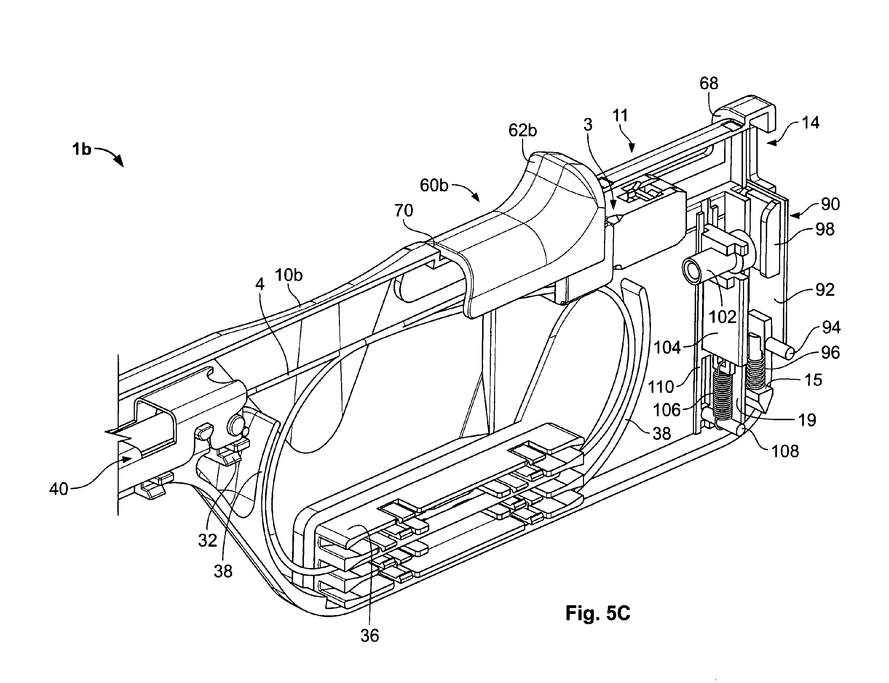

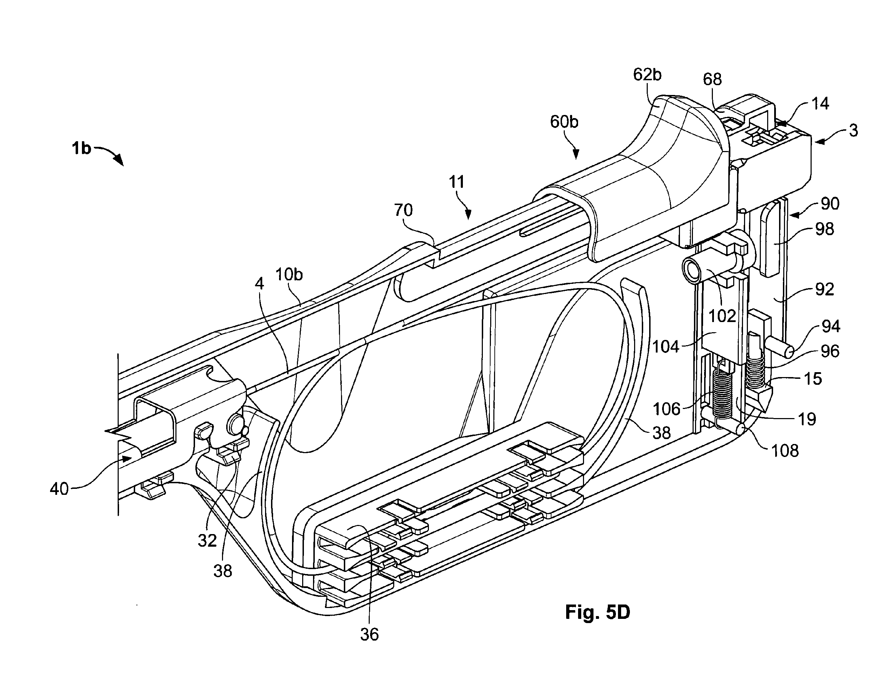

At the front side of the tray housing 10b, which side accommodates the connector opening 14, a connector opening shutter 90and a dustcap remover 100 are arranged. Particularly, the connector 3 is protected at its connection side, which is the front side facing the connector opening 14, by a dustcap 102. Said dustcap 102 is held by the dustcap remover 100, which is comprised of a dustcap holding plate 104 having a recess encompassing the dustcap 102 and a spring element 106 arranged between a spring element holding pin 108 provided near the lower side of the tray housing 10b and the thereto opposing side of the dustcap receiving plate 104. In the pre-stressed state of the dustcap remover 100 as shown in Figure 4, the spring element 106, which is a coil spring, is pre-stressed. The spring element 106 does not be necessarily formed of a coil spring. Any spring element may be used which is capable of performing a retracting of the dustcap removing plate 104 toward the lower side of the tray housing 10b. The dustcap removing plate 104 is guidingly supported by a dustcap removing plate guidance 110 formed inside with the tray housing 10b. In an area between the spring element 108 and the thereto opposing side of the dustcap removing plate 104, a stop 112 is provided by the tray housing 10b to limit a motion of the dustcap removing plate 104 after releasing the dustcap 102 from the connector 3, which releasing operation will be described in detail with reference to Figures 5A to 5D.

The connector opening 14 is closed by a connector opening shutter 90. Particularly, the tray housing 10b guidingly supports inside the connector opening shutter 90. Said connector opening shutter 90 is separated from the dustcap remover 100 by a tray housing separation wall 19. The connector opening shutter 90 comprises a shutter plate 92 having a shutter plate closure portion 98, which shutter plate 92 extends in parallel to the front surface side of the tray housing 10b between the connector opening 14 and the lower side of the tray housing 10b. The shutter plate 92 supports at a side facing the connector 3 the shutter plate closure portion 98 which has a size for closing the connector opening 14, preferably in a sealingly manner. The shutter plate 92 has a shutter plate moving pin 94 extending perpendicular to the lateral side of the tray housing 10b so as to protrude through a pin guidance slit 13 an outer surface side of the tray housing 10b (Figure 3). The pin guidance slit 13 extends in parallel to a moving direction of the connector opening shutter 90. Particularly, the pin guidance slit 13 extends in parallel to the front surface side of the tray housing 10b.

The connector opening shutter 90 further has a shutter plate spring element 96 arranged between a lower side of the shutter plate 92 and a tray housing support portion 15. The shutter plate spring element 96 is a coil spring. However, the present invention is not construed to be limited to such a spring element. Any spring element may be used for the connector opening shutter 90, which spring element is capable of being elastically compressed. The shutter plate spring element 96 adopts a relaxed state in Figure 4 to be compressible toward the lower side of the tray housing 10b.

As further shown in Figure 4, the splice holder 36 is integrally formed with the tray housing 10b and supports a pair of engagement hooks 32.

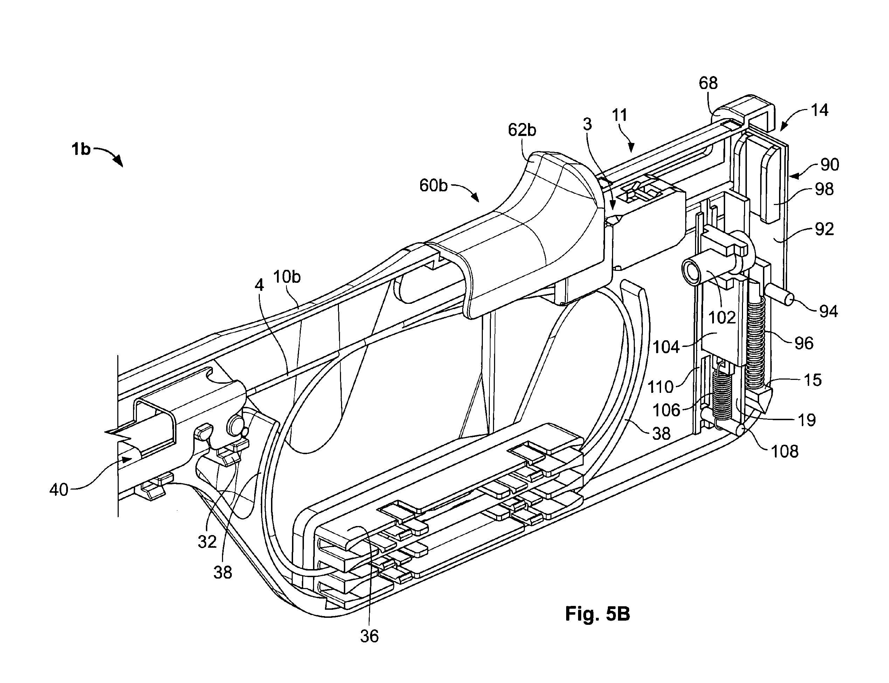

Figures 5A to 5D show a perspective side view of one housing half of the tray housing 10b with different positions of the slidable connector holder 60b for allowing a connection of the connector 3 in the mating position 68 of the slidable connector holder 60b. Particularly, Figure 5A shows a configuration of the cable connector tray 1 b as already described in regard of Figure 4. The slidable connector holder 60b is placed at a position between the retracted position 70 and the mating position 68. Said position is substantially secured by the cooperation of the connector 3 which connection end is protected by the dustcap 102 which is received in the recess of the dustcap removing plate 104. Due to the pre-stressed state of the dustcap remover spring element 106, a tensile load is applied on the connector 3 preventing a sliding motion of the connector 3 and thus of the slidable connector holder 60b in longitudinal direction between the retracted position 70 and the mating position 68. In detail, the tensile load is applied substantially perpendicular to the moving direction of the slidable connector holder 60b. The state of the slidable connector 60b, the dustcap remover 100 and the connector opening shutter 90 as shown in Figures 4 and 5A denotes preferably a delivering state of the cable connector tray 1b. By having this state, the optical fiber cable 2 is inserted into the tray housing 10b after removing one housing half from the cable connector tray 1b, wherein a configuration as shown in Figures 4 and 5A with the optical fiber cable 2 is obtained. For connecting the connector 3 with the mating connector, the slidable connector holder 60b is initially moved to the retraced position 70, whereby the dustcap 102 is released from the connection end of the connector 3. Due to the spring force applied by the dustcap remover spring element 106, the dustcap removing plate 104 encompassing the dustcap 102 by the recess formed in said dustcap removing plate 104 is moved away from the connector 3, substantially in perpendicular direction to the moving direction of the slidable connector holder 60b (Figure 5B).

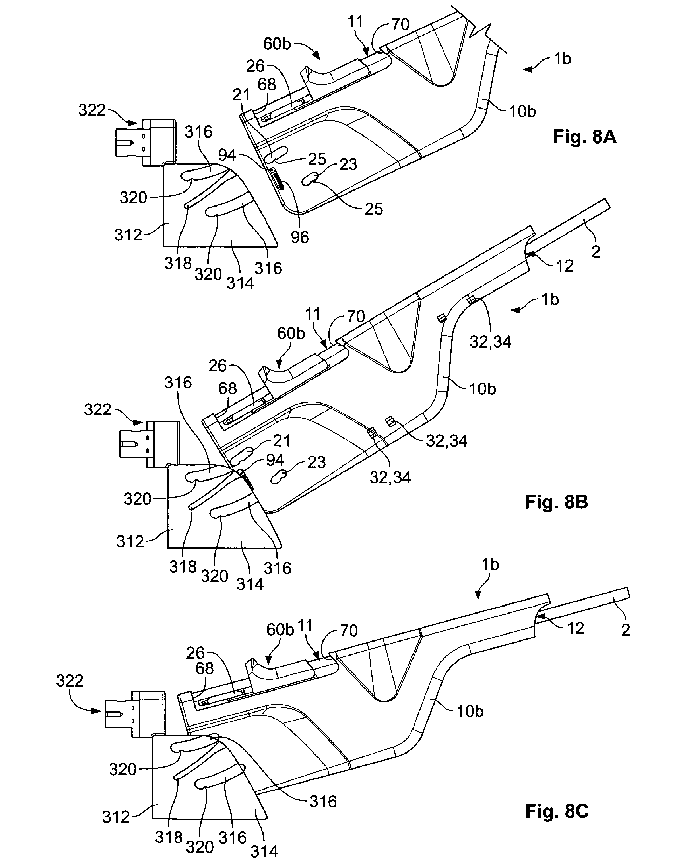

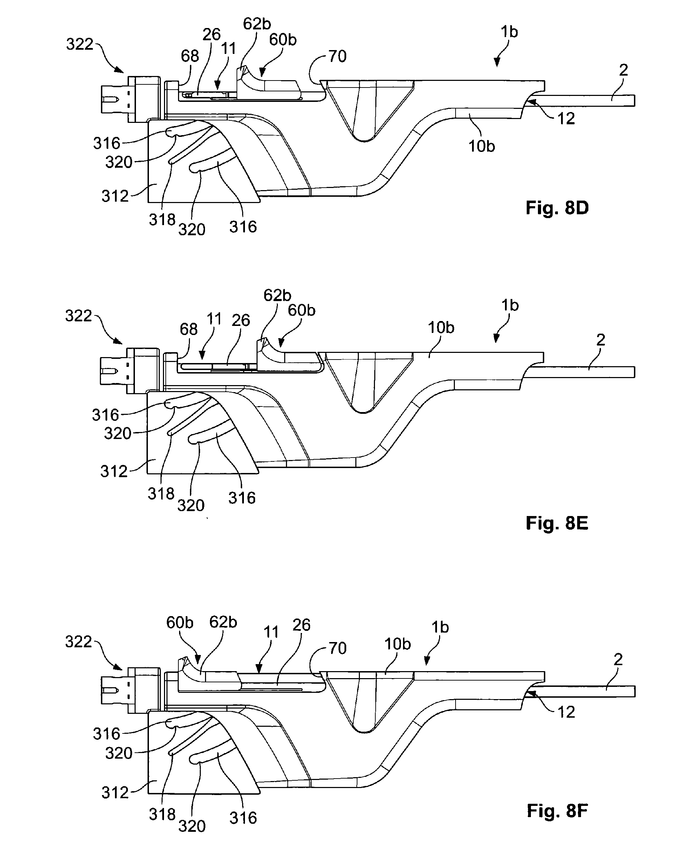

Thereafter, the connector opening shutter 90 is removed from the connector opening 14 by moving the shutter plate moving pin 94 toward the lower side of the tray housing 10b. The shutter plate spring element 96 is compressed thereby. Hence, the connector opening 14 is free to pass. The motion of the connector opening shutter is preferably obtained by inserting the cable connector tray 1 b into a respective tray holder as it will be described further below with reference to Figures 8A to 8F.

Subsequent to the aforesaid removing of the connector opening shutter 90, the slidable connector holder 60b is moved to the mating position 68. Thus, the connector 3 passes the connector opening 14 and protrudes from the front side of the tray housing 10b. After reaching the mating position 68, connection between the connector 3 and the mating connector is obtained.

In view of the above, two preferred embodiments for the cable connector tray 1 a, 1b have been described in detail. The cable connector tray 1 a according to the first preferred embodiment can be likewise provided with the connector opening shutter 90 and the dustcap remover 100 described with reference to the cable connector tray 1 b according to the second preferred embodiment. For incorporating said means, the tray housing 10a of the cable connector tray 1 a does not be required to be shaped as the tray housing 10b. The moving direction of the dustcap remover 100 and the connector opening shutter 90 can be performed transverse to the moving direction of the slidable connector holder 60a. Preferably, the moving direction of said means may be parallel to a front surface side of the tray housing 10a.

In the following, a preferred embodiment of a tray device using the cable connector tray 1 a, 1 b, respectively, will be described.

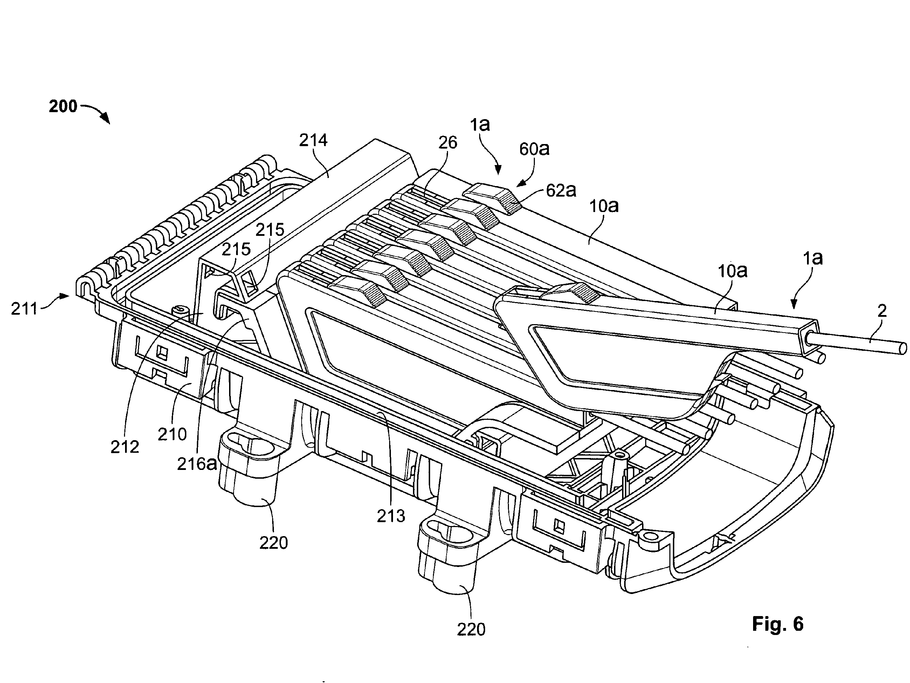

Figure 6 shows a perspective top view of a tray device 200 according to a preferred embodiment of the present invention, which tray device 200 is preferably configured to hold a cable connector tray 1a.

The tray device 200 comprises a tray holder 212 formed of an injection molded plastic material and comprising a tray holder frame 216a receiving and securing a plurality of cable connector trays 1a. The tray holder 212 is supported by a base 210 having at a longitudinal end side a hinge 211 for cooperating with a cover to be hingeably connected with said hinge 211 1 and adapted to cover the received cable connector trays 1 a. The cover may be likewise made of an injection molded plastic material. The base 210 further has a circumferential sealing recess 213 for receiving a sealing material to seal the cable connector trays 1 a after the cover is assembled to the base 210. Thus, the tray device 200 is applicable in underground and/or areal applications.

The base 210 further provides at an outer surface side a plurality of fixations 220 for securing the tray device 200 at a place of installation. The fixation may be conducted by means of screws, bolts or further fixation means capable of fixing the base 210 to a predetermined further device. The base 210 further provides an opening for receiving at least one optical fiber cable comprising at least one optical fiber element to be connected with the optical fiber element accommodated in the cable connector tray 1a. For allowing connection between the optical fiber elements, the tray holder 212 provides a mating connector support 214 with mating connector support openings 215 through which a mating connector to be connected to the connector 3 can be inserted and supported thereby. The support opening 215 is aligned with the connector opening 14 of the cable connector tray 1a to allow simple connection of the mating connector with the connector 3 housed inside the tray housing 10a by sliding the slidable connector holder 60a toward the mating position 68.

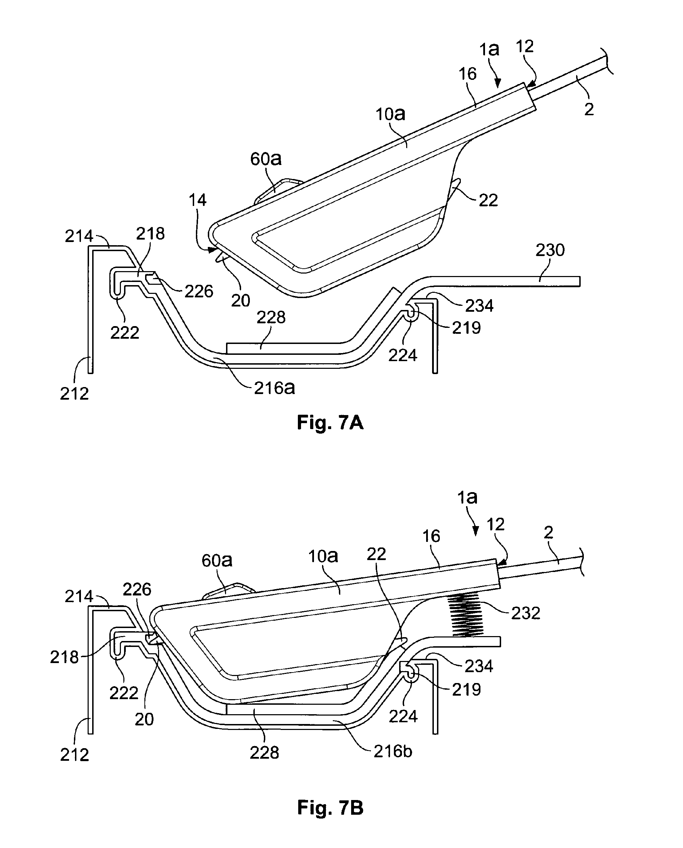

Figure 7A and 7B show a side view of the tray holder 212 and the cable connector tray 1 a to be assembled thereto. Said tray holder 212 has cross-sectionally a shape corresponding to an outer shape of the cable connector tray 1a. Thus, the tray holder 212 forms a negative of the trapezoidal shaped cable connector tray 1 a. On an upper surface side of the tray holder 212, which upper surface side is adapted to receive the cable connector tray 1 a, is arranged a tray holder frame 216a, 216b preferably made of a bendable material such as rubber or the like. Particularly, for each cable connector tray 1a to be received by the tray device 200, a single tray holder frame 216a, 216b is provided. The tray holder frame 216a, 216b is secured against the tray holder 212 by a longitudinal end 218 received within a tray holder recess 222 formed at the side of the mating connector support 214. At the opposing side of the tray holder 212, a further tray holder recess 224 is formed which receives a tray holder frame protrusion 219 protruding from a surface side of the tray holder frame 216a, 216b opposing the side receiving the cable connector tray 1 a. As the tray holder frame 216a, 216b is preferably made of a bendable material, the portion between the tray holder frame protrusion 219 and the longitudinal end 218 is movably supported by the respective part of the tray holder 212.

The tray holder frame 216a, 216b further provides a snapper receiving hole 226 for receiving the front snapper 20 formed at the front surface side of the cable connector tray 1a. Said front snapper 20 is preferably a fixed snapper integrally formed with the tray housing 10a. Alternatively, according to a further preferred embodiment of the present invention, said front snapper 20 can be a slidable snapper which may be operable by a sliding motion of the slidable connector holder 60a or by a further slider providable at an outer surface side of the tray housing 10a.

On an upper surface side of the tray holder 216a, 216b, a compressible member 228 is arranged, wherein said compressible member 228 partially covers the upper surface side of the tray holder frame 216. Particularly, the compressible member 228 extends from a surface area adapted to receive the lowest surface side of the cable connector tray 1 a to the tray holder frame protrusion 219.

The cable connector tray 1 a is assembled on the tray holder frame 216a, 216b by inserting first the first snapper 20 into the associated snapper receiving hole 226 and by pressing down the rear side of the cable connector tray 1 a toward the tray holder frame 216a, 216b. Thereby, the rear snapper 22 is inserted in a rear snapper receiving hole provided with the tray holder 212. Simultaneously, the compressible member 228 is compressed and applies a pressing force against the cable connector tray 1 a along a releasing direction opposing the assembling direction.

As particularly shown in Figure 7A, the tray holder frame 216a comprises a tray holder frame extension 230 being accessible from an upper side of the tray holder frame 216a in a received state of the cable connector tray 1a. Particularly, the tray holder frame extension 230 protrudes the sleeve portion 16 of the cable connector tray 1 a in its received state substantially in a direction parallel to the longitudinal direction of the optical fiber cable 2. Thereby, by pressing the tray holder frame extension 230 from the upper side of the tray holder frame 216a, the tray holder frame part projecting from the tray holder frame protrusion 219 toward the snapper receiving hole 226 is bent around the tray holder frame protrusion 219 so as to push the cable connector tray 1 a away from the rear snapper receiving hole to release the rear snapper 22 therefrom. In cooperation with the pressing force applied by the compressed compressible member 228, the cable connector tray 1a is pushed toward the releasing direction, thus enabling a simple disassembling of the cable connector tray 1 a from the tray holder 212.

According to a further preferred embodiment as shown in Figure 7B, the tray holder frame 216b does not be provided with the tray holder frame extension 230. Particularly, the tray holder frame 216b provides a shape corresponding to a lower surface of the cable connector tray 1 a extending from the cable opening 12 to the connector opening 14. In this further preferred embodiment, a spring member 232 is arranged between the sleeve portion 16 and the opposing upper surface side of the tray holder frame 216b. Thus, after releasing the rear snapper 22 from the rear snapper receiving hole, the cable connector tray 1 a is pushed by the spring member 232 with the sleeve portion 16 toward the releasing direction for improving the disassembling of the cable connector tray 1a from the tray holder 212. The spring member 232 may be a single member arranged during the assembling of the cable connector tray 1 a to the tray holder 212 or may be secured either on the upper surface side of the tray holder frame 216b or the lower surface side of the sleeve portion 16. The releasing of the rear snapper 22 may be preferably conducted by providing a slidable snapper 22. Said slidable snapper may be retracted either by a sliding motion of the slidable connector holder 68 or by a further slider provided on the outer surface side of the tray housing 10a. As a further alternative, respective clearance may be provided by the size of the tray holder frame 216b so as to allow a slight move of the cable connector tray 1a toward the snapper receiving hole 226, whereby the rear snapper 22 is released from the associated snapper receiving hole formed near the body frame protrusion 219.

Figures 8A to 8F show a tray holder 312 according to a further preferred embodiment of the present invention, which tray holder 312 can be used with the above-described tray device 200. Said tray holder 312 is configured to receive and hold the cable connector tray 1 b.

The tray holder 312 comprises a tray holder wall portion 314 providing for each lateral snapper 21, 23, a lateral snapper guidance 316 and a shutter moving pin guidance 318. The lateral snapper guidance's 316 and the shutter moving pin guidance 318 extend from a receiving side of the tray holder 312 toward an opposing side thereof. On an upper surface of the tray holder 312, a mating connector support 322 is arranged. The tray holder 312 has a shape so as to expose preferably at least the connector opening 14, the slidable connector holder 60b and the cable opening 12.

The lateral snapper guidance's 316 comprise near a longitudinal end thereof a ridge part 320 having a shape corresponding to the convexity 25 provided with the lateral snappers 21, 23, respectively. The shutter moving pin guidance 318 is arranged between the lateral snapper guidance's 316 and extends substantially inclined toward the lower side of the tray holder 312. The shutter moving pin guidance 318 is configured to move the shutter plate moving pin 94 from an upper position in parallel to the front surface side of the cable connector tray 1 b toward a lower position, which lower position corresponds to a state at which the connector opening shutter 90 provides access to the connector opening 14.

As shown in Figures 8A to 8C, the cable connector tray 1 b is inserted with the lateral snappers 21, 23 and the shutter plate moving pin 94 into the associated lateral snapper guidance's 316 and the shutter moving pin guidance 318 in an inclined manner. The cable connector tray 1 b is moved forward until the convexities 25 of the lateral snappers 21, 23 engages the ridge parts 320 of the respective lateral snapper guidance's 316. Thereby, the cable connector tray 1 b is secured against the tray holder 312. Further, the lateral snapper guidance's 316 are thus shaped that the cable connector tray 1 b is turned from an inclined position at the state of insertion of the lateral snappers 21, 23 into the respective lateral snapper guidance's 316 to a position in which the connector opening 14 faces the mating connector support 322 (Figures 8D - 8F). The securing of the cable connector tray 1 b against the tray holder 312 may be perceived by the technician by a click when the convexities 25 come into engagement with the associate ridge parts 320 of the lateral snapper guidance's 316. After reaching the securing state as particularly shown in Figure 8D, at which the slidable connector holder 60b adopts a position as shown in Figure 5A, the slidable connector holder 60b is moved toward the retracted position 70 (Figure 8A) to remove the dustcap 102 from the connectable end of the connector 3. Subsequently, the slidable connector 60b is moved toward the mating position 68 (Figure 8F) for performing connection of the connector 3 with the mating connector. At said secured state, axial pull relief from the connection, i.e. from the connector 3 is ensured. Particularly, the axial tension load acting on the cable 2 is absorbed by the tray housing at the point of securing of the cable 2 against the tray housing 10b, wherein the axial tension load is further transmitted to the tray holder 312 by the securing formed between the cable connector tray 1 b and the tray holder 312. The same also applies in view of the above described preferred embodiment of the cable connector tray 1 a.

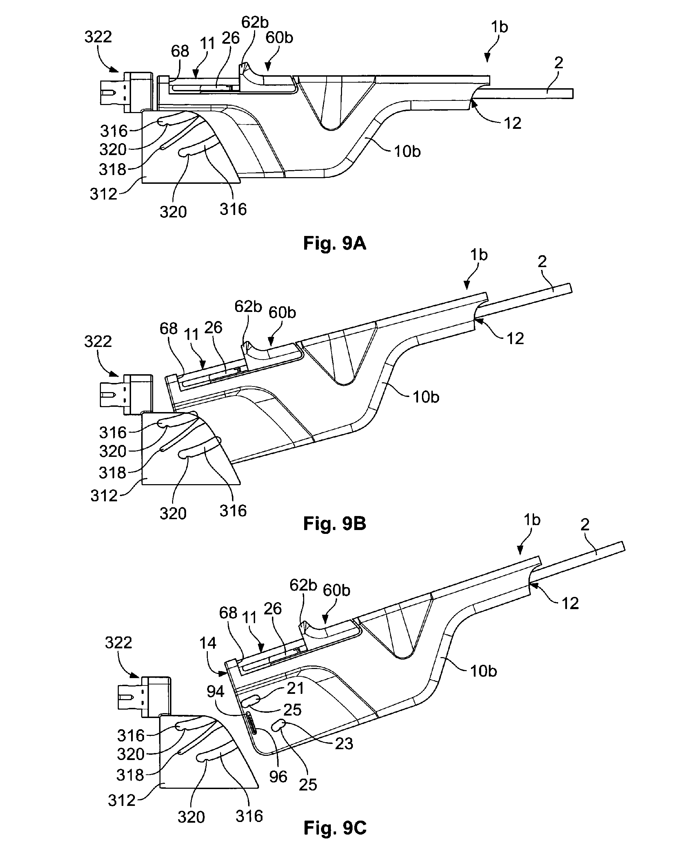

Figures 9A to 9C show the disassembling of the cable connector tray 1 b from the tray holder 312. At first, the slidable connector holder 60b is moved toward the retracted position 70 (Figure 9A) to release the connection between the connector 3 and the mating connector, respectively. Thereafter, the cable connector tray 1 b is released from the body 312 by applying respective force being larger than the securing force formed between the convexities 25 and the ridge parts 320 of the lateral snapper guidance's 316. The cable connector tray 1 b is removed from the tray holder 312 in an inclined manner due to the guidance provided by the lateral snapper guidance's 316. During the disassembling of the cable connector tray 1 b from the tray holder 312, the connector opening shutter 90 is guided by the shutter moving pin guidance 318 so as to close the connector opening 14. After completely disassembling the cable connector tray 1 b from the body 312 (Figure 9C), the shutter plate moving pin 94 reaches the upper position corresponding to a closing of the connector opening 14 by the connector opening shutter 90. The closed state of the connector opening shutter 90 is kept by the shutter plate spring element 96.

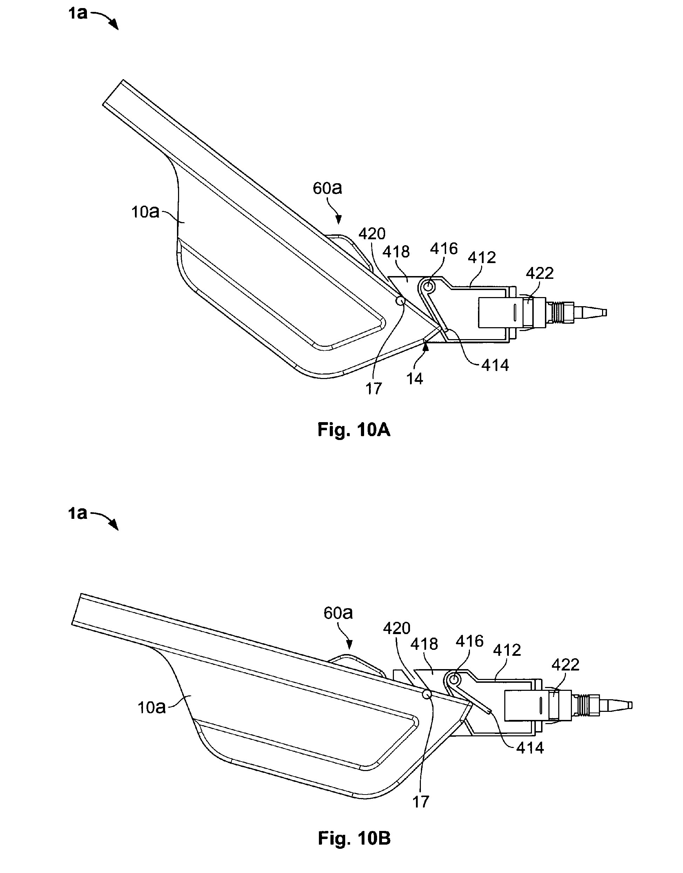

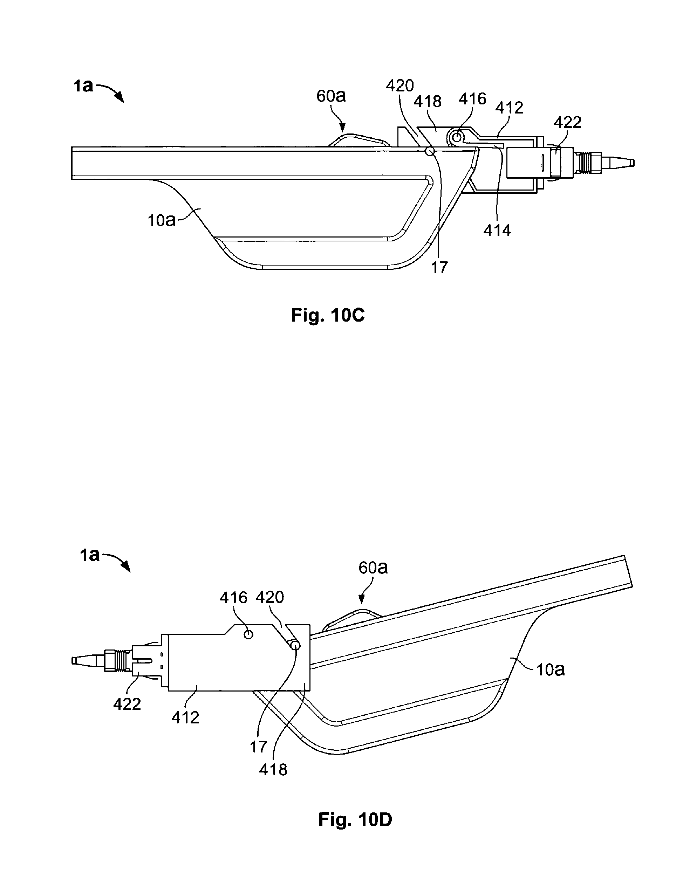

Figures 10A to 10D show a tray holder 412 according to a further preferred embodiment of the present invention. Said tray holder 412 may also be provided with the above-described tray device 200. Particularly, the tray holder 412 has substantially a box shape with a mating connector opening receiving a mating connector 422, which mating connector opening is provided at one longitudinal end side of the tray holder 412. At a side opposing said mating connector opening, the tray holder 412 provides a further opening for receiving the connector opening 14 of the cable connector tray 1a. The further tray holder opening is closed by a hinged flap 414. Between the hinged flap 414 and the mating connector opening is provided a space for accommodating the connectable end of the mating connector 422 and the front part of the cable connector tray 1 a, which front part includes the connector opening 14. Thereby, a protected connection between the connector 3 and the mating connector 422 can be conducted. The hinged flap 414 is hinged so as to rotate around an axis extending perpendicular to the longitudinal direction of the tray holder 412, which longitudinal direction extends from the mating connector opening toward the further tray holder opening. The hinged configuration of the hinged flap 414 is obtained by a pin 416 providing the rotational axis for the hinged flap 414 and being encompassed by an upper end of the hinged flap 414.

The tray holder 412 further provides two opposing tray holder wall portions 418 extending in longitudinal direction of the tray holder 412 away from the further tray holder opening. Each of said tray holder wall portions 418 provides a transverse recess 420 extending from an upper side of the body wall portion 418 transversely toward the lower side of the body 412. Said transverse recesses 420 are adapted to receive a lateral pin 17 formed with the tray housing 10a and protruding from a lateral side thereof. Said lateral pin 17 is arranged at the upper surface side of the tray housing 10a near the connector opening 14. Particularly, the position of the lateral pin 17 is configured to be received by the transverse recess 420 of the tray holder 412 so as to allow an insertion of the connector opening 14 through the further tray holder opening into the space accommodating the connectable end of the mating connector 422. Accordingly, the transverse recesses 420 have such a length that the connector opening 14 is placed substantially so as to align the endface of the connector 3 with the endface of the mating connector 422. Thus, the lateral pin 17 provides a turning point for the cable connector tray 1 a during the assembling of the cable connector tray 1 a to the tray holder 412. Moreover, due to the rather trapezoidal shape of the tray housing 10a and the arrangement of the connector opening 14 in the arm near the apex at which the arm merges with the base line of the trapezoidal shaped tray housing 10a, said apex is used to be inserted through the further tray holder opening by opening the hinged flap 414 to an inside of the space accommodating the connectable end of the mating connector 422. Thus, the cable connector tray 1a can be simply mounted on the tray holder 412. The tray holder 412 can be small shaped, thus reducing the size of the tray device 200.

Additionally, as shown in Figure 10D, the transverse recess 420 extends from the upper side of the tray holder 412 toward the lower side by departing from the endface of the mating connector 422 and the mating connector opening, respectively. Due to said configuration, axial pull relief from the connection formed between the connector 3 and the mating connector 422 is provided, as the axial tension load absorbed by the tray housing 10a and acting in a direction away from the tray holder 412 can be transmitted from the lateral pin 17 received by the transverse recess 420 to the tray holder 412.

Moreover, as shown by the Figures 10A to 10D, the cable connector tray 1 a is mounted on the tray holder 412 by inserting the lateral pins 17 in the transverse recesses 420 and moving the cable connector tray 1 a until the lateral pins 17 reaches an end of the transverse recesses 420. Thereafter, the cable connector tray 1 a is rotated about a rotating axis formed by the lateral pins 17, whereby the front part of the cable connector tray 1 a, which front part includes the connector opening 14 abuts against the hinged flap 414 and pivots said hinged flap 414 toward an inside of the tray holder 412. After bringing the connector opening 14 into alignment with the endface of the mating connector 422, the slidable connector holder 60a is moved forward to move the connector 3 to the mating position at which connection is performed between the connector 3 and the mating connector 422. The aforesaid alignment may be simply achieved preferably after the hinged flap 414 abuts against an upper inside surface of the tray holder 412. For this, the tray holder 412 is to be shaped accordingly. Particularly, the upper surface side of the tray holder 412 has a step-shaped cross-section with a larger diameter part at the side forming the opening for receiving the connector 3. Said larger diameter part accommodates the tray holder pin 416 and merges with the small diameter part at a position being overlapped by the hinged flap 414 in its open position.

Figures 11A to 13 show a preferred embodiment of the wrap-around cable fixation module 40 used for securing the optical fiber cable 2 against the cable connector tray 1 a, 1 b. The wrap-around cable fixation module 40 comprises a cable support member 42 and a cable securing member 46. The cable support member 42 has a pair of hinging bosses 41 near one of its longitudinal ends and a pair of snap-fit projections 43 near its other longitudinal end. The cable securing member 46 comprises a pair of hinging recesses 47 near one of its longitudinal ends which are engageable with the hinging bosses 41 of the cable support member 42. Further, the cable securing member 46 has a pair of snap detent apertures 49 near its other longitudinal end. The snap-fit projections 43 fit into the snap detent apertures 49 on closure of the two parts together with the cable securing member 46 fitting over and outside the cable support member 42 (Figure 11A).

The cable support member 42 further comprises guide bosses 51 which fit into guide recesses 53 provided with the cable securing members 46. Moreover, stop shoulders 45 are provided with the cable support member 42 to help control the closure of the cable fixation module 40. The respective parts made of materials providing sufficient flexibility for the snap-fitting action.

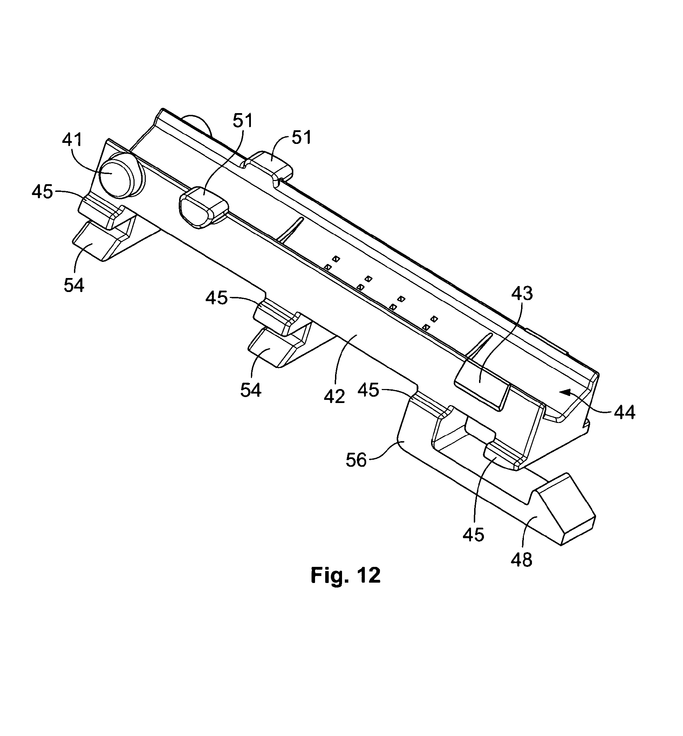

The cable support member 42 further comprises mounting feets 54, 56 preventing an inclination of the cable fixation module 40 when it is inserted into the sleeve portion 16 of the cable connector tray 1 a, 1b. Thereby, it can be ensured that the optical fiber cable 2 is guided substantially in a straight manner. The mounting feet 56 provided near the longitudinal end of the cable fixation module 40 supports a pretension fixation module spring element 48 providing a pressing force against inner pressing surfaces 18 provided inside the sleeve portion 16. Particularly, the fixation module spring element 48 provides a resilient force along a direction extending substantially perpendicular to a longitudinally extending outer surface side 50 of the cable fixation module. Hence, a simple securing of the optical fiber cable 2 against the tray housing 10a, 10b of the cable connector tray 1 a, 1 b can be achieved. For this, the optical fiber cable 2 is inserted into a cable support channel 44 provided with the cable support member 42 (Figures 11B and 12), wherein the optical fiber cable 2 is clamped by the cable securing member 46 which is provided with a pair of resilient plate-like tongues 58.

Generally, the wrap-around cable fixation module 40 is shaped similarly to the module described in the above mentioned International Patent application WO 2009/040566. The wrap-around fixation module 40 used for the cable connector tray 1 a, 1b differs from said conventional fixation module by the fixation module spring element 48 providing the resilient force as described aforementioned.

### Reference List

- 1 a, 1b: cable connector tray
- 2: optical fibre cable
- 3: connector
- 4: optical fibre element
- 5: first connector part
- 6: second connector part
- 10a, 10b: tray housing
- 11: recess part
- 12: cable opening
- 13: pin guidance slit
- 14: connector opening
- 15: tray housing support portion
- 16: sleeve portion
- 17: lateral pin of the tray housing
- 18: inner pressing surface
- 19: tray housing separation wall
- 20: front snapper
- 21, 23: lateral snapper
- 22: rear snapper
- 26: guidance slit
- 28: lateral guidance slit
- 30: loop storage area
- 32: engagement hook
- 34: engagement recess
- 36: splice holder
- 38: loop storage support wall portion
- 40: wrap-around cable fixation module
- 41: hinged boss
- 42: cable support member
- 43: snap-fit projection
- 44: cable support channel
- 45: stop shoulder
- 46: cable securing member
- 47: hinging recess
- 48: fixation module spring element
- 49: snap detent aperture
- 50: outer surface side of the fixation module
- 51: guide boss
- 53: guide recess
- 54, 56: mounting feet
- 58: resilient plate-like tongue
- 60a, 60b: slidable connector holder
- 62a, 62b: handle
- 64: visual indicator
- 68: mating position
- 70: retracted position
- 90: connector opening shutter
- 92: shutter plate
- 94: shutter plate moving pin
- 96: shutter plate spring element
- 98: shutter plate closure portion
- 100: dustcap remover
- 102: dustcap
- 104: dustcap removing plate
- 106: dustcap remover spring element
- 108: spring element holding pin
- 110: dustcap remover guidance
- 112: dustcap remover stop
- 200: tray device
- 210: base
- 211: hinge
- 212, 312, 412: tray holder
- 213: sealing recess
- 214, 322: mating connector support
- 215: mating connector opening
- 216a, 216b: tray holder frame
- 218: longitudinal end of the tray holder frame
- 219: tray holder frame protrusion
- 220: tray device fixation
- 222, 224: tray holder recess
- 226: snapper receiving hole
- 228: compressible member
- 230: tray holder frame extension
- 232: spring member
- 234: upper surface of the tray holder
- 314, 418: tray holder wall portion
- 316: lateral snapper guidance
- 318: shutter moving pin guidance
- 320: ridge part
- 414: hinged flap
- 416: tray holder pin
- 418: tray holder wall portion
- 420: transverse recess
- 422: mating connector

## Claims

1. A cable connector tray (1 a; 1 b) comprising a tray housing (10a; 10b) with a cable opening (12) for receiving and guiding a cable (2) to an inside of the tray housing (10a; 10b) and a connector opening (14) for receiving a connector (3),
**characterized in that**
the connector (3) is mounted movably relative to the tray housing (10a; 10b), the slidable connector (3) is supported by the tray housing (10a; 10b) so as to be movable between a mating position for connecting the connector (3) with a mating connector, and a retracted position at which the connector (3) is disconnected from the mating connector and retracted into the tray housing (10a; 10b).

2. The cable connector tray (1 a; 1 b) according to claim 1, **characterized by** a slidable connector holder (60a; 60b) holding the connector (3) and being slidably supported by the tray housing (10a; 10b).

3. The cable connector tray (1 a; 1 b) according to claim 1 or 2, **characterized by** a guidance slit (26), wherein the connector (3) or the connector holder (60a; 60b) has a handle (62a; 62b) accessible from an outside of the tray housing (10a; 10b), the handle (62a; 62b) passes through the guidance slit (26) to be movably guided between two positions (68, 70) spaced apart from each other, one position (68) is associated with said mating position and the other position (70) is associated with said retracted position.

4. The cable connector tray (1 a; 1 b) according to any one of the preceding claims,
**characterized in that** the cable connector tray (1 a; 1 b) comprises an indicator (64) indicating the connector (3) position.

5. The cable connector tray (1 a; 1 b) according to any one of the preceding claims,
**characterized by** a connector opening shutter (92) arranged at the connector opening (14) and being movable between an open position and a closed position.

6. The cable connector tray (1) according to any one of the preceding claims, **characterized by** a dustcap remover (100) arranged inside the tray housing (10a, 10b) for removing a dustcap (102) protecting an endface of the connector (3).

7. The cable connector tray (1) according to claim 6, **characterized in that** the dustcap remover (100) is adapted to remove the dustcap (102) from the connector (3) while moving the connector (3) toward the retracted position.

8. The cable connector tray (1 a; 1 b) according to any one of the preceding claims, **characterized in that** the tray housing (10a; 10b) comprises snapping means for releasably securing the cable connector tray (1) against a tray holder (212; 312).

9. The cable connector tray (1a; 1 b) according to claim 8, **characterized in that** the snapping means comprises at least two snappers (20, 22) arranged at opposing sides of the tray housing (10a) and extending substantially in opposing directions with respect to each other; or wherein the snapping means comprises at least one lateral snapper (21, 23) arranged at a lateral side of the tray housing (10b) at a position nearer to one of the cable opening (12) and the connector opening (14) than to the other one thereof.

10. A tray device comprising
at least one cable connector tray (1 b) according to claim 5 or to any one of claims 6 to 9 in combination with claim 5, and
a tray holder (312) for receiving and releasably holding the at least one cable connector tray (1 b) and comprising a shutter guidance (318) so as to move the shutter (92) in an open position when the cable connector tray (1b) is releasably mounted on the tray holder (212).

11. A tray device comprising
at least one cable connector tray (1 b) according to claim 9 with at least one lateral snapper (21; 23), and
a tray holder (312) for receiving and releasably holding the at least one cable connector tray (1 b) so as to allow sliding of the connector (3) through the connector opening (14),
wherein the tray holder (312) has at least one wall portion (314) with a lateral snapper guidance (316) for receiving and guiding the at least one lateral snapper (21; 23), and
wherein each of the lateral snapper guidance (316) and the at least one lateral snapper (21; 23) provides securing means (25, 320) associated with each other for securing the cable connector tray (1 b) against the tray holder (312) in a received state of the cable connector tray (1 b).

12. A tray device comprising
at least one cable connector tray (1 a) according to any one of claims 1 to 9, and
a tray holder (412) for receiving and holding the at least one cable connector tray (1 a) so as to allow a sliding of the connector (3) through the connector opening (14), wherein each of the tray holder (412) and the at least one cable connector tray (1 a) provides associated guiding and pivoting means (17, 420) for mounting the cable connector tray (1a) on the tray holder (412).

13. A tray holder (412) for holding a cable connector tray (1a) according to any one of claims 1 to 9, the tray holder (412) comprises a tray holder shutter (414) protecting a mating connector (422) and being movable to an open position while mounting the cable connector tray (1 a) to the tray holder (412) or while moving the connector (3) of the cable connector tray (1 a) to the mating position.

14. The tray holder (412) according to claim 13, **characterized in that** the tray holder (412) comprises axial pull relief means (420) for absorbing an axial tensile load acting on the cable connector tray (1a).

15. A method for connecting a connector (3) supported by a cable connector tray (1 a; 1 b) according to any one of claims 1 to 9 with a mating connector (422) supported by a tray holder (312; 412) provided for releasably supporting the cable connector tray (1 a; 1 b), wherein at least one of the cable connector tray (1 a; 1 b) and the tray holder (312; 412) has a shutter (92; 414) being movable between an open position and a closed position; the method has the steps of
inserting engagement means (17; 21,23) provided with one of the cable connector tray (1 a; 1 b) and the tray holder (312; 412) into engagement receiving means (420; 316) formed with the other one of the cable connector tray (1 a; 1 b) and the tray holder (312; 412),
moving the shutter (92; 414) from the closed position to the open position, and moving the connector (3) toward the mating position for connecting the connector (3) with the mating connector (422).
